Europäisches Patentamt

(19) European Patent Office

Office européen des brevets

(11) Publication number: **0 113 460**
**A2**

(12) # EUROPEAN PATENT APPLICATION

(21) Application number: **83112554.7**

(22) Date of filing: **14.12.83**

(51) Int. Cl.³: **G 06 F 9/44**
**G 11 C 9/06**

(30) Priority: **17.12.82 US 450600**

(43) Date of publication of application:
**18.07.84 Bulletin 84/29**

(84) Designated Contracting States:
**AT BE CH DE FR GB IT LI LU NL SE**

(71) Applicant: **Symbolics, Inc.**
**257 Vassar Street**
**USA-Cambridge, Massachusetts 02139(US)**

(72) Inventor: **Weinreb, Daniel L.**
**94 Boston Avenue**
**Somerville, Mass. 02144(US)**

(72) Inventor: **Holloway, John T.**
**16 Highland Street**
**Belmont, Mass. 02178(US)**

(72) Inventor: **Moon, David A.**
**93 Jackson Street**
**Cambridge, Mass. 02140(US)**

(72) Inventor: **Cannon, Howard I.**
**5 Sunnyknoll Terrace**
**Lexington, Mass. 02173(US)**

(72) Inventor: **Knight, Thomas F.**
**58 Douglas Road**
**Belmont, Mass. 02178(US)**

(72) Inventor: **Edwards, Bruce E.**
**20 Branchaud Road**
**Belmont, Mass. 02178(US)**

(74) Representative: **Hanewinkel, Lorenz, Dipl.-Phys. et al,**
**Patentanwälte Dr.Ing. Heinz Nickels Dipl.-Phys. Lorenz**
**Hanewinkel Detmolder Strasse 26**
**D-4800 Bielefeld 1(DE)**

(54) Symbolic language data processing system.

(57) A symbolic language data processing system comprises a sequencer (SQ) unit, a data path (DP) unit, a memory control (MC) unit, a front-end processor (FEP), an I/O unit (I/O) and a main memory (MM) connected on a common Lbus (LBUS) to which other devices (OD) like peripheral and data units can be connected for intercommunication. The system architecture includes a novel bus network, a synergistic combination of the Lbus, microtasking, centralized error correction circuitry and a synchronous pipelined memory including processor mediated direct memory access, stack cache windows with two segment addressing, a page hash table and page hash table cache, garbage collection and pointer control, a close connection of the macrocode and microcode which enables one to take interrupts in and out of the macrocode instruction sequences, parallel data type checking with tagged architecture, procedure call and microcode support, a generic bus and a unique instruction set to support symbolic language processing.

Fig 1

- 1 -

SYMBOLIC LANGUAGE DATA PROCESSING SYSTEM

The invention relates to a data processor programmable in a symbolic processing language and having a main memory, a memory controler, and a buffer memory for storing the data of at least one set of contiguous main memory addresses and being accessible at a higher speed than the main memory and central processing means for operating on data and producing memory addresses.

The present invention relates to a data processing system which is programmable in a symbolic processing language, in particular LISP.

LISP is a computer programming language which originated as a tool to facilitate Artificial Intelligence research. Artificial Intelligence is a branch of computer science that seeks to understand and model intelligent behavior with the aid of computers. Intelligent behavior involves thinking about objects in the environment, how objects relates to each other, and the properties and uses of such objects. LISP is designed to facilitate the representation of arbitrary objects and relationships among them. This design is to be contrasted with that of other languages, such as FORTRAN, which are designed to facilitate computations of the values of algebraic formulae, or COBOL, which is designed to facilitate processing the books and records of businesses.

0113460

The acronym "LISP" stands for "List Processing Language", as it was dubbed when Professor John McCarthy of MIT (now of Standford University) invented LISP in the 1950's. At that thime, the notion of representing data objects and complex relations between them by "lists" of storage locations was novel. LISP's motion of "object" has been incorporated into many subsequent languages (e.g.,languages derived from it are the first choice of Artificial Intelligence researchers all over the world.

LISP also facilitates the modeling of procedural knowledge (i.e., "how to do something" as opposed to "what something is"). All procedural knowledge is expressed as "functions", computational entities which "know how" to perform some specific action or computation upon supplied objects.

Although the text of LISP functions can be from one line to several thousand lines long, the language imposes no penalty for dividing a program into dozens of hundreds of functions, each one the "expert" in some specific task. Thus, LISP facilitates "modularity", the clean division of a program into unique areas of responsibility, with well-defined interaction. The last twenty years of experience in the computer science community has established the importance of modularity for correct program operation, maintenance and intelligibility.

LISP also features "extensible syntax or notation". This means that language constructs are not limited to those supplied, but can include new constructs, defined by the programmer, which are relevant to the problem at hand. Defining new language constructs does not involve modification of the supplied software, or expertise in its internal details, but is a standard feature of the language available to the applications (and systems) programmer, within the grasp of every beginner. Through this feature, LISP can incorporate new developments in computer science.

LISP frees programmers from the responsibility for the detailed management of memory in the computer. The common FORTRAN and PL/I decisions of how big to make a given array or block of memory have no place in LISP. Although it is possible to construct fixed-size arrays, LISP excels in providing facilities to represent arbitrary-size objects, sets of unlimited numbers of elements, objects concerning to which the number of details or parameters is totally unknown, and so forth. Antiquated complaints of computers about fixed-size data stores ("ERROR, 100 INPUT ITEMS EXCEEDED") are eliminated in systems written in LISP.

LISP provides an "interactive environment", in which all data (knowledge about what things are and how they are) and functions (knowledge about how to do things) co-exist. Data and functions may be inspected or modified by a person developing a program. When an error ist discovered in some function or data object, this error may be corrected, and the correction tested, without the need for a new "run". Correction of the error and trial of the repair may sometimes be accomplished in three keystrokes and two seconds of real time. It is LISP's notion of an interactive environment which allows both novices and experts to develop massive systems a layer at a time. It has been observed that LISP experts enter programs directly without need for "coding sheets" or "job decks"; the program is written, entered, and debugged as one operation. Functions can be tested as they are written and problems found. The computer becomes an active participant in program development, not an adversary. Programs developed in this way build themselves from the ground up with solid foundations. Because of these features, LISP program development is very rapid.

LISP offers an unique blend of expressive power and development power. Current applications of LISP span a broad range from computer-aided design systems to medical diagnosis and geophysical analysis for oil exploration. Common to these applications is a requirement for rapidly constructing large temporary data structures and applying procedures to such structures (a data structure is complex configuration of computer memory representing or modeling an object of interest). The power of LISP is vital for such applications.

Researchers at the M.I.T. Artificial Intelligence Laboratory initiated a LISP Machine project in 1974 which was aimed at developing a state-of-the-art personal computer design to support programmers developing complex software systems and in which all of the system software would be written in LISP.

The first stage of the project, was a simulator for a LISP machine written on a timeshared computer system. The first generation LISP machine, the CONS, was running in 1976 and a second generation LISP Machine called the CADR incorporated some hardware improvements and was introduced in 1978, replacing the CONS. Software development for LISP machines has been ongoing since 1975. A third generation LISP machine, the LM-2 was introduced in 1980 by Symbolics, Inc., the applicant.

The main disadvantages of the aforementioned prior art LISP machines and of symbolic language data processing systems in general, is that the computer hardware architecture used in these systems was originally designed for the more traditional software languages such as FORTRAN, COBOL, etc.. As a result, while these systems were programmable in symbolic languages such as LISP, the efficiency and speed thereof were considerably reduced due to the inherent aspects of symbolic processing language as explained hereinbefore.

The main object of the present invention is to eliminate the disadvantages of the prior art data processing systems which are programmable in symbolic languages and to provide a data processing system whose hardware is particularly designed to be programmable in symbolic languages so as to be able to carry out data processing with an efficiency and speed heretofore unattainable.

This object is achieved by a data processor the memory controler of which containing means for effecting storage of data of at least one set of contiguous main memory addresses in the buffer memory, means for identifying those contiguous addresses in main memory for which data is stored in the buffer memory and means receptive of the memory addresses for addressing the buffer memory instead of the main memory when the identifying means identifies the address as being in said at least one set and for addressing the main memory instead of the buffer memory when the identifying means identifies the address as not being in said at least one set.

Other objects described below are achieved by the data processor according to the present invention which is preferably programmable in symbolic languages and most advantageously in Zetalisp which is a high performance LISP dialect and which is also programmable in the other traditional languages such as FORTRAN, COBOL etc.

The system has many features that make it ideally suited to executing large programs which need high-speed object-oriented symbolic computation. Because tne system hardware and firmware were designed in parallel, the basic (macro)instruction set of the system is very close to pure LISP. Many Zetalisp instructions execute in one microcycle. This means that programs written in Zetalisp on the system execute at near the clock rate of the processor.

The present invention is not simply a speeded-up version of the older LISP machines. The system features an entirely new design which results in a processor which is extremely fast, but also robust and reliable. This is accomplished through a myriad of automatic checks for which there is no user overhead.

The system processor architecture is different from that of conventional system and the features of the processor architecture include e.g. the following:

- Microprogrammed processor designed for Zentralisp
- 32-bit data paths
- Automatic type-checking in hardware
- Full-paging 256 Mword (1 GByte) virtual memory
- Stack-oriented architecture
- Large, high-speed stack buffer with hardware stack pointers
- Fast instruction fetch unit
- Efficient hardware-assisted garbage-collection unit
- Microtasking unit
- 5 Mwords/s data transfer rate.

The system according to the present invention comprises a sequencer unit, a data path unit, a memory control unit, a front-end processor, an I/O and a main memory connected on a common bus network further called Lbus to which other peripherals and data units can be connected for intercommunication. The circuitry present in these aforementioned elements and the firmware contained therein achieved the objects of the present invention. In particular, the novel areas of the system include the Lbus, the synergistic combination of the Lbus, microtasking, centralized error correction circuitry and a synchronous pipelined memory including processor mediated direct memory access, stack cache windows with two segment addressing. a page hash table and page hash table cache, garbage collection and pointer control, a close connection of the macrocode and microcode which performes interrupts in and out of the macrocode instruction sequences. parallel data type checking with tagged architecture, procedure call and microcode support. a generic bus and anunique instruction set supporting symbolic language processing.

The stack caching feature of the present invention is carried out in the memory controller which comprises means for effecting storage of data of a least one set of contiguous main memory addresses in a buffer memory which stores data of at least one set of contiguous main memory addresses and is accessible at a higher speed than the main memory. The memory controller also comprises means for identifying those contiguous addresses in main memory for which data is stored in the buffer memory and means receptive of the memory addresses for directly going to the buffer memory and not through the main memory when the identifying means identifies the address as being in the set of contiguous addresses or for going directly to the main memory and not through the buffer memory when the identifying means identifies the address as not being in the set of contiguous memory addresses.

The central processor of the system which operates on data and produces memory addresses, has means for producing a given memory address corresponding to a base pointer and a selected offset from the base pointer and means for arithmetically combines the given address and offset prior to applying same to tne addressing means. Further, the central processing means produces the base pointer and offset in one timing cycle and arithmeticalls combines the base pointer and offset in the same timing cycle in a preferred manner by providing an arithmetic logic unit which is dedicated solely to this function.

Moreover. the addressing means advantageously comprises means for converting the addresses from the central processor unit further called cpu to physical locations in main memory by using the same circuitry as the identifying means.

Further. in order to more efficiently carry out these functions, the cpu has means for limiting tne offset from the base pointer to within a preselected range and for insuring that the arithmetic combination of the base pointer and offset fall within at least one set of memory addresses. This is advantageously carried out in tne compiler wnich compiles the symbolic processing language into sequences of macrocode instructions.

The new parallel data type checking and tagged architecture is archieved by providing the main memory with the ability to store data objects, each having an identifying type field. Means are provided for separating the type field from the remainder of each data object prior to the operation on the data object by the cup. In parallel with the operation on the data object, means are provided for checking the separated type field with tespect to the operation on the remainder of the associated data object and for generating a new type field in accordance with that operation. Means thereafter combine the new type field with the results of the operation. This system particularly advantageously executes each operation on the data object in a predetermined timing cycle and the separating means, checking means and combining means act to separate, check and combine the new type field within the same timing cycle as that of the operation. The system also is provided with means for interrupting the operation of the data processor in response to the predetermined type field that is generated to go into a trap if the type field that is generated is in error or needs to be altered, and for resuming the operation of the data processor upon alteration of the type field.

The new page hash table feature is carried out in the system wherein the main memory has each location defined by a multi-bit actual address comprising a page number and an offset number. The cpu operates on data and stores data in the main memory with an associated virtual address comprising a virtual page number and an offset number. The page hash table feature is used to convert the virtual address to the actual address and comprises means for performing a first hash function on the virtual page number to reduce the number of bits thereof to form a map address corresponding to the hashed virtual page number, at least one addressable map converter for storing the actual page number and the virtual page number corresponding thereto in the map address corresponding to the hashed virtual page number and means for comparing the virtual page number with the virtual page number accessed by the map address whereby a favorable comparison indicates that the stored actual page number is in the map converter. Means are also provided for performing a second hash function on the virtual page number in paralell with that of first hash function and conversion and means for applying the accessed actual page number and the original offset number to the main memory when there is a favorable comparison and for applying the second hashed virtual page number to the main memory when the comparison is unfavorable.

In a particularly advantageous embodiment, the converting means comprises at least two addressable map converters each receptive of the map address corresponding to the first hashed virtual page number and means responsive to an unfavorable comparison from all converters for writing the virtual page number and actual page number at the map address in the least recently used of the at least two map converters.

In the event that the first and second hashed addresses do not locate the main memory has means defining a page hashed table therein addressable by the second hashed virtual page number and a secondary table for addresses. The cup is responsive to macrocode instructions for executing at least one microcode instructions, each within one timing cycle and wherein the converting means comprises means responsive to the failure to locate the physical address in the page hash table for producing a microcode controlled look-up of the address in the secondary table.

A further back-up comprises a secondary storage device, for example a disk and wherein the main memory includes a third table of addresses and the secondary storage device includes a fourth table of addresses. The converting means has means responsive to the failure to locate the address in the secondary table for producing a macrocode controlled look-up of the address in the third table of main memory and then the fourth table if not in the tnird table, or indicating an error if it is not in the secondary storage device. Another feature provides means for entering the address in all of the tables where the address was not located.

The hardware support for the key feature of the close interrelationsnip between the microcode and macrocode comprises an improvement in the cpu wherein means are provided for defining a predetermined set of exceptional data processor conditions and for detecting the occurrence of these conditions during the execution of sequences of macrocode instructions. Means are responsive to the detection of one of the conditions for retaining a selected portion of the state of the data processor at the detection to permit the data processor to be restarted to complete the pending sequence of macrocode instructions upon the removal of the detected condition. Means are also provided for initiating a predetermined sequence of macrocode instructions for the detected condition to remove the detected condition and restore the data processor to the pending sequence of macrocode instructions.

In a particularly advantageous embodiment, the means for initiating comprises means for manipulating the retained state of the data processor to remove the detected condition and means for regenerating the nonretained portion of the state of the data processor.

The new cpu has means for executing each macrocode instruction by at least one microcode instruction and the means defining the set of conditions and for detecting same comprises means controlled by microcode instructions. Moreover, the means for retaining the state of the data processor comprises means controlled by microcode instructions and the means for initiating the predetermined sequence of macrocode instructions comprises means controlled by microcode instructions.

Another important feature of the present invention is the unique and synergistic combination of the Lbus, the microtasking, the synchronized pipelined memory and the centralized error correction circuitry. This combination is carried out in the system according to the present invention with a cpu which executes operations on data in predetermined timing cycles which is synchronous with the operation of the memory and at least one peripheral device connected on the Lbus. The main memory has means for initiating a new memory access in each timing cycle to pipeline data therein and thereout and the cpu further comprises means for storing microcode instruction task sequences and for executing a microcode instruction in each timing cycle and means for interrupting a task sequence with another task sequence in response to a predetermined system condition and for resuming the interrupted task sequence when the condition is removed. The Lbus is a multiconductor bidirectional bus which interconnects the memory, cpu and peripherals in parallel and a single centralized error correction circuit is shared by the memory, cpu and peripherals. Means are provided for controlling data transfers on the bus in synchronism with the system timing cycles to define a first timing mode for communication between the meory and cpu through the centralized error correction circuit and a second timing mode for communication between the peripheral device and the cpu and thereafter the main memory through the centralized error correction circuit. In accordance with this combination of features, data are stored in main memory from a peripheral and data are removed from main memory for the peripheral at a predetermined location which is based upon the identification of the peripheral device. Moreover, the cpu has means for altering the state of the peripheral device from which data are received, depending upon the state of the system.

The feature of the generic bus is provided to enable the system according to the present invention, having the cpu in main memory connected by a common system bus to which input and output devices are connectable, to communicate with other peripherals and computer systems on a second bus which is configured to be generic by providing first interfacing means for converting data and control signals between the system bus and the generic bus formats to effect transmission between the system bus and the generic bus and second interfacing means connected to the generic bus for converting data and control signals between the generic bus and a selected external bus format to permit data and control signal transmissions between the system bus and the peripherals of the selected external bus type. A new key feature of this generic bus is that the first interfacing means converts data and control signals independently of the external bus that is selected. Thus the first interfacing means includes means forconverting the control signals and address of an external bus peripheral from the system bus format to the generic bus format independently of the control signal and address format of the external bus.

The pointer control and garbage collection feature associated therewith is carried by means for dividing the main memory into predetermined regions, means for locating data objects in the regions and means for procuding a table of action codes, each corresponding to one region. A generated address is then applied to the table in parallel with the operation on that address to obtain the action code associated therewith and means are provided which are responsive to the action code for determining, in parallel with the operation on the address, if an action is to be taken. In a particular advantageous embodiment, the action code is obtained and the response thereto is determined within the same timing cycle as that of the operation on the address. This is done by controlling the determining means by microcode instructions.

The cpu includes means for executing a sequence of macrocode and microcode instruction sequences to effect garbage collection in the system by determining areas of memory to be garbage collected and wherein the means for producing the action code table produces one action code which initiates the garbage collection sequences. In accordance with the invention, the garbage collection is effected by means for examining the data object at a generated address to see if it was moved to a new address, means for moving the data object to a new address in a new region if it was not moved, means for updating the data object at the generated address to indicate that it was moved, and means for changing the generated address to a new address if and when the data object is moved and for effecting continuation of the operation on the data object of the generated address.

The data processor system according to the present invention provides hardware support for garbage collection which enables it to carry cut this garbage collection sequences in a particularly efficient manner by dividing the main memory into pages and providing storage means having at least one bit associated with each page of memory. The given address is thereafter located in a region of memory and means are provided for entering a code in the at least one bit for a given page in parallel with the locating of the address in a region of memory to indicate whether an address therein is in a selected set of regions in memory.

This means for entering the code comprises means for producing a table of action codes each corresponding to one region of memory. An address is applied to the table in parallel with the locating thereof and means are provided for determining if the address is in one of the selected set of regions in response to its associated action code. The garbage collection is effected in the set of memory regions by reviewing each page and means sense the at least one bit for each memory page to enable the reviewing means to skip that page when the code is not entered therein.

The bus system in accordance with the present invention is another feature of the present invention which, in the context of the system according to the present invention includes the data processor alone, the data processor in combination with peripherals and peripheral units which have the means for communication with the data processor on the Lbus. The data processor includes bus control means for effecting all transactions on the bus in synchronism with the data processor system clock and with a timing scheme including a request cycle comprising one clock period wherein the central processor produces a bus request signal to effect the transaction and within the same clock period puts the address data out on the bus. The request cycle is followed by an active cycle comprising at least one next clock period wherein the peripheral unit is accessed. The active cycle is followed by a data cycle comprising the next clock period and wherein data is placed on the bus by the peripheral unit. The bus control means also has means defining a block bus transaction mode for receiving a series of data request signals from the central processor in consecutive clock periods and for overlapping the cycles of consecutive transactions on the bus.

The Lbus control according to the present invention also has means for executing a direct memory access further called DMA transfer under microcode control to achieve communication between a peripheral device and the cpu and thereafter the main memory. In a particularly advantageous embodiment of the present invention, a single centralized error correction circuit is shared by the memory, central processor and peripheral device, and all data transfers over the bus are communicated through the single centralized error correction circuit.

Thus, a data unit for use with a data processing system according to the present invention has means therein which is responsive to a transaction request signal on the bus for receiving address data in a request cycle comprising one system clock period, means for accessing address data in an active cycle comprising at least one system clock period and for producing a weight signal when more than one system clock period is necessary and means for applying data to the bus in a data cycle comprising the next system clock period. The data unit also may comprise means for receiving request signals in consecutive clock periods and for overlapping the request, active and data cycles for consecutive transactions.

A data unit in accordance with the present invention is also able to effect data transfers on the bus in synchronism with the system timing cycle under microcode control to effect a DMA data transfer.

These and other objects, features and advantages of the present invention are achieved in accordance with the method and apparatus of the present invention as disclosed in more detail hereinafter.

0113460

- 17 -

Brief description of the drawings:

| Fig. 1 | is a block diagram of the data processor; |
|---|---|
| Fig. 2 and 3 | are the block diagramms of the sequencer circuit; |
| Fig. 4 | is a block diagram of the memory controler error correction and timing circuitry; |
| Fig. 5 | is a block diagram of the memory controler instruction fetch unit; |
| Fig. 6 | is a block diagram of the memory controler hash and · map circuitry; |
| Fig. 7 and 8 | are the block diagramms of the data path unit with the central processor and address calculator; |
| Fig. 9 | Old Program Counter circuit; |
| Fig. 10 | Main Memory circuit; |
| Fig. 11 | Front End Processor: Page Tag circuit, Bus Buffer, Generic Bus circuit; |
| Fig. 12 | FEP: ·Direct Memory Access circuit, External Bus interface, Serial Bus interface, Console Display interface, micro clock, Nano FEP; |
| Fig. 13 | I/O-circuit: Display control and interface; |
| Fig. 14 | I/O-circuit: NET-control and interface; |
| Fig. 15 | I/O-circuit: Micro Device and Disk Control circuit. |

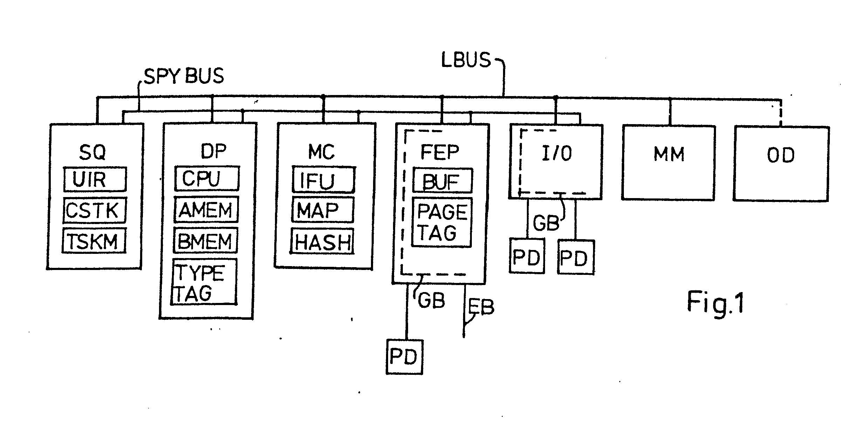

Fig. 1 is a block diagram of the system according to the present invention. As shown therein, the basic system of the present invention includes a sequencer SQ, a data path unit DP, a memory controller MC, a front end processor FEP an I/O unit and the main memory MM all connected in parallel on a common bus called the Lbus. As is also shown therein, other devices OD such as peripherals and the like can be connected in parallel along the Lbus.

The basic system includes a processor cabinet having reserved, color-coded slots are provided on the Lbus backplane for the DP, SQ, FEP, IO and MM-boards. The rest of the backplane is undedicated, with free 36 bit slots on the basic system. Plugging a memory board into an undedicated slot sets the address of that board. There are no switches on the boards for this purpose. For diagnostic purpose, the FEP alway senses which board is plugged into what slot it can even sense the serial number of the board via the Lbus.

No internal cables are used in the system. All board-level interconnections are accomplished through the backplane. An external cable is provided for connecting a console to the processor.

While the system according to the present invention is physically configured by components in the manner set forth in Fig. 1, many of the novel features of the system have elements thereof on one or more of the system components. Thus the system components will be described with respect to the function of the detailed circuitry contained therein followed by the operation of the system features in terms of these circuit functions.

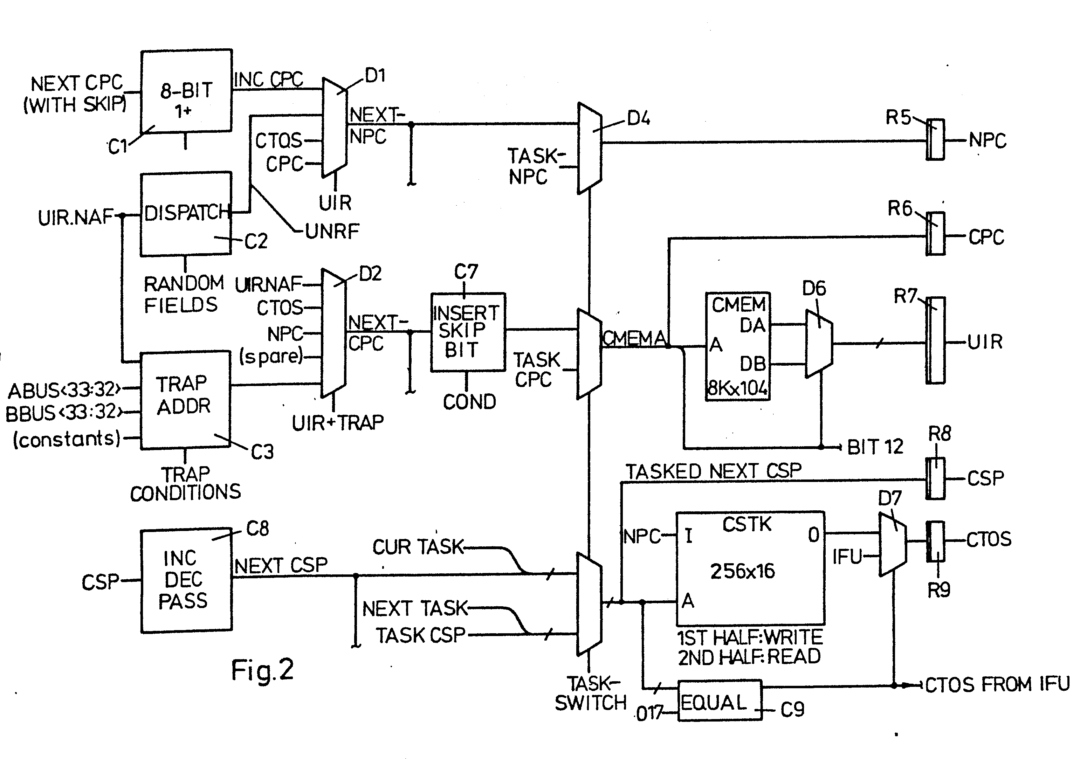

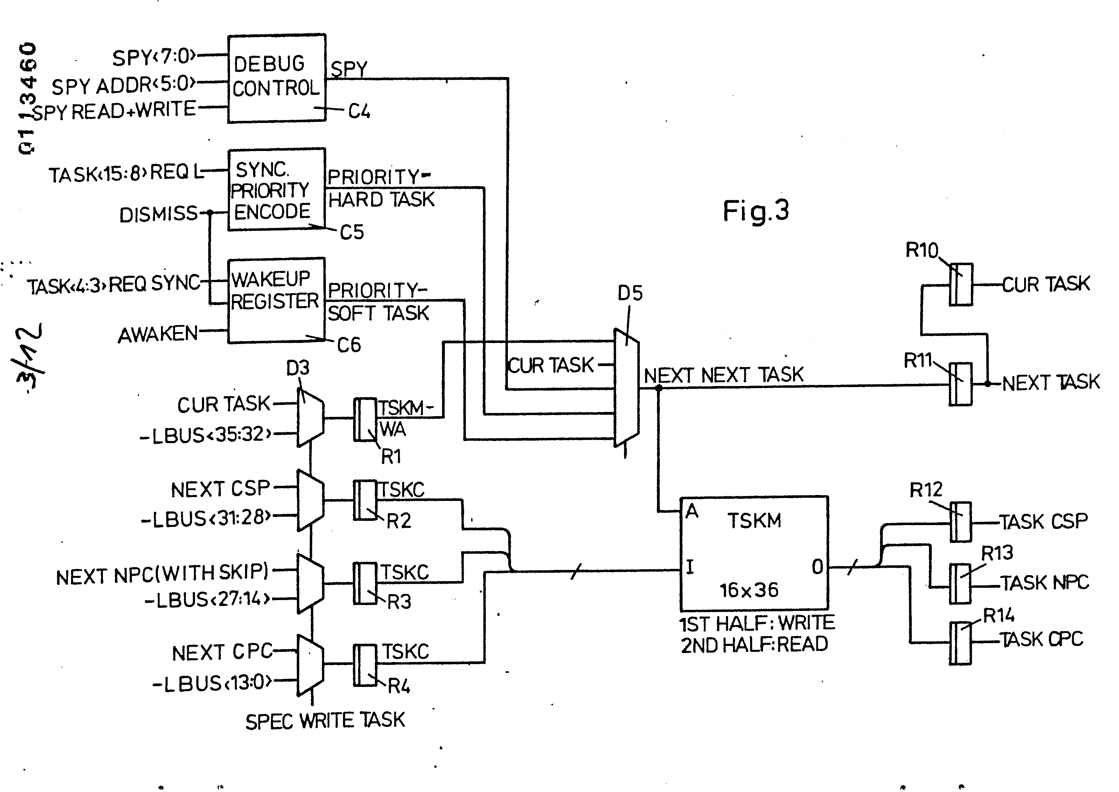

The sequencer is shown in block diagram form in Fig. 2 and 3.

The sequencer controls the operation of the machine, that is, it implements the microtasking. In carrying this out, it utilizes an 8K x 112 microcode control memory CMEM and the associated circuitry for the control memory including the control memory address driver, the control memory address select CMEMA, the control memory parity, the microinstruction decode circuitry UIRD and the microinstruction fields UIRF.

Each 112-bit microcode instruction specifies two 32-bit data sources from a variety of internal scratchpad registers. There is for normal macro instructions no interpreting microprogram-routine, since many Zetalisp instructions are executed in one microcycle.

The implemented micromachine is time-division multiplexed. This means that the processor performs housekeeping operations such as driving the disk in addition to executing macroinstructions. This has the advantage of providing a disk controller and other microtasks with the full processing capability and temporary storage of the system micromachine. The close coupling between the micromachine and the disk controller has been proven to be a powerful feature.

Up to eight different hardware tasks can be activated. Control of the micromachine typically switches from one task to another every few microseconds. The following other tasks run in the system:

- Zetalisp emulator task - it executes instructions
- Disk transfer task - it fetches data from main memory and loads the disk shift-register; handles timing and control for the disk sequencing.
- Ethernet handshaking and protocol encoding and decoding, where Ethernet is a local-area-network for communication between computer systems and peripherals, and their users. The physical structure of the Ethernet ist that of a coaxial cable connecting all the nodes on the network.

The FEP and microdevices (i.e., those devices serviced by microcode, such as the disk controller and the Ethernet controller) can initiate task switches on their own behalf. The task priority circuitry C5, C6 determines the priority of the microtasks. Multiple microcontexts are supported, eliminating the need to save a microtask's context before switching to another.

More specifically, the sequencer includes tasks state capture circuitry TSKC, task state memory TSKM for storing the tasks state, a task state parity circuit, a task memory output register TASK CPC, TASK NPC, TASK CSP and a task priority circuit C5, C6, which determines the priority of 16 tasks which are allocated as follows:

Tasks 8-15    DMA or I/O tasks. Assigned to devices during boot time wakeup requests which come from open-collector bus lines.

Task 7        The task state memory for this task is available for the FEP to clobber for debugging purposes. The only way this can become the current task is by the FEP forcing it.

Task 1,2,5,6  Software controled tasks.
Wakeup requests are in a
register; bit n defining the task can be
set by doing a special function. One of
these tasks is the background service task
for all DMA tasks (set up next address and
word count); the others remain unassigned.

Task 4        Low-speed devices; wakeup request from
open-collector bus line.

Task 3        FEP service (wakeup settable by FEP)

Task 0        Emulator, Wakeup request ist always true.

DMA tasks normally only run for 2 cycles per wakeup. The first cycle
emits the address from an so called A memory AMEM, increments it,
does DISMISS, and skims on a condition from the device (e.g. error
or end of packet). The second cycle decrements the word count and
skips on the result (into either the normal first cycle or a "last"
first cycle). The data transfer between device and memory takes
place over the Lbus under control of the memory control.The "last"
first cycle is the same as normal, but its successor sets a "done"
flag and wakes up the background service task. It also turns off
wakeup-enable in the device so more transfer don't try to happen
until the next DMA operation is set up. For some devices there is
double buffering of DMA addresses and word counts, and there are two
copies of the DMA microcode; each related DMA task changes to the
other when its word count is exhausted. Processing by the background
service task is interruptible by DMA requests for other devices.

Tasks 1,2,5,6, the software requested tasks, are useful as lowered-
priority continuations of higher-prioity tasks. They would not
normally be awakened by the Emulator (although START-I/O would
do that).

Wakeup requests for the hardware tasks (8-15) are put on open-collector lines on the bus. These are totally unsynchronized. Each device has a register which contains a 3-bit task number and 1-bit tasking-enable; task numbers are assigned to devices according to the desired priority. A wakeup in the absence of enable is held until enable is turned on. Once a device has asserted its wakeup request, it remains asserted (baring changing of enable or the assigned task number) until the request is dismissed. The request drops an adequate time before the end of that microinstruction cycle, so that 2 cycles later it will be gone from the synchronizer register and the task will not wake up again.

Delay from wakeup request to clock that finishes the first microinstruction of service is 4 to 5 cycles (e. g. a microsecond) if this is the highest priority task and no tasking-inhibit occurs. Really high speed devices may set their wakeup request some cycles e.g. 600 ns early. The processor synchronizes and priority-encodes the wakeup requests and determines whether a task switch is called for, in the task circuitry.

Dismissing is different for hardware and software tasks. When a hardware task is dismissed it executes one additional microinstruction when a software task is dismissed it executes two additional microinstructions. The hardware task timing is necessary so that a DMA task can wake up and run for only two cycles.

If a dismiss is done when a task switch has already been committed, such that the microinstruction after the dismiss is going to come from a different task, then the machine goes ahead and dismisses. This means that the succeeding microinstruction, which would normally be executed immediately, will not be executed until the next time the task wakes up. This does not apply to a task which dismisses as soon as it wakes up, such as a typical DMA task;

since a task will not be preempted by a higher-priority task immediately after a task whitch was performed, when a task wakes up it is always guaranteed to run for at least 2 cycles.

Task-switch timing/sequencing is as follows:

First cycle, first half:

Prioritizing synchronized task requests. Hardware task request are masked out of the priority encoder if they are being dismissed this cycle.

First cycle, second half:

Selected task goes to to NEXT NEXT TASK lines. If this differs from current task, NEXT TASK SWITCH is asserted. Fetching state of selected task into TASK CPC, TASK NPC, TASK CSP registers. Just before clock, it is decided whether to really switch tasks or to stay in the same task, in which case the TASK CPC, etc. registers don't matter, and NEXT TASK SWITCH ist turned off.

Second cycle, both halves:

TASK SWITCH is asserted. TASK CPC is selected onto CMEM A: fetch first microinstruction and new task. TASK NPC is selected into NPC register. CPS gets CMEM A which is TASK CPC. TSKC register gets NEXT CPC, NEXT NPC, NEXT CSP, and CUR TASK lines. NEXT TASK lines have new task number.

Second cycle, second half:

Control-stack is addressed by NEXT TASK and TASK CSP: CTOS gets top of new stack (unless switching to emulator and stack empty, it gets IFU in that case). CSP gets TASK CSP.

Third cycle, both halves:
Executes first microinstruction of task. Fetches second microinstruction of task. If only waking up for 2 cycles (dismiss is asserted), next task this cycle is chosen (line first cycle above).

Third cycle, first half:
Task memory is written from TSKC (save state of old task). Address is TSKM WA which got loaded from CUR TASK during second cycle.

Fourth cycle:
Executes second microinstruction of task. If only woken up for 2 cycles, TASK SWITCH is asserted and no another new task is chosen this cycle.

Another feature of the sequencer circuitry is trap addressing. The sources of traps are mostly on the data path board, with the memory control providing the MAP MISS TRAP. Slow jumps all come from the data path board. The sequencer executes normally if no trap or slow jump condition is present. With regard to the trap address interpretation:

Bit 12 is the skip bit; Bits 8-11 are the dispatch bits. Bits 0-7 are capable of incrementing. Thus each macroinstruction gets 4 consecutive control-memory locations; although there is a next-address field in the microinstruction. It is used for many things and so consecutive addressing is often important. It is also possible for most macroinstructions to skip into their consecutive addresses (except for the small opcodes where this conflicts with a wired-in trap address).

In order to do a dispatch, it is necessary to find a block of 16 locations (in bits 8-11) which are not in use: this is done either by finding a block of opcodes that don't use all 4 of their consecutive locations, or by turning on bit 12 (there are a few dispatches that skip at the same time).

The sequencer also includes control stack addressing control including the control stack circuit CSTK, the control stack pointer CSP, C8, the control stack registers CTOS, the program counter CPC and next program counters registers NPC, the next program count select D1, D4 and the skip and program count increment circuitry C1.

Each task gets 16 locations of control stack since its address adders and multiplexors are switched in 4-bit increments. Under normal conditions the top half of its 32-location stack are scarcely used. Really only 15 locations of control-stack may be used, because in the control stack is written on every cycle whether or not a push jump function PUSHJ is to be performed.

The CSP register contents always points at the highest valid location in the stack. Thus it contains 17 when the stack is empty. We do write-before-read rather than read-before-write on this machine, however there is pipelining through the CTOS register. In fact a 1-instruction subroutine will work.

When the emulator stack is empty (CSP-17 and the emulator task is in control), there is an "extra" stack location which contains the next-instruction address from the instruction fetch unit IFU. Switching with the POPJ Signal to this location generates the NEXT INST signal and refrains from decrementing the stack pointer (leaves it 17 rather than making it 16). The NEXT INST signal drives the instruction fetch unit IFU to advance and initiates one or two other random things (it clears the stack-adjustment counter in the data path).

In the first half of each cycle, the content of the next program counter NPC register is written into the next free location (for the current task) in the control-stack CSTK. This is 1+ the location the control stack pointer CSP register points at. The NPC register usually contains 1+ the control-memory address from which the currently-executing microinstruction came.

In the second half of each cycle, the top of the control-stack is read into the control stack CTOS register. In the next cycle, the content of the CTOS and CSP registers will be equal. When switching tasks, it is read from the new task's stack.

Note that what happens when the function POPJ is performed, results from the pipelining. In the cycle before the POPJ, the subroutine return address (or instruction fetch unit IFU next-instruction address) was read into the CTOS register; this came from the stack location pointed to by the CSP register if the previous cycle did not perform the functions PUSHJ or POPJ. Now when the POPJ function happens the CSP content is decremented and the next lower subroutine return address is read into the CTOS register, in case the next cycle also performes the function POPJ. When the function POPJ leads to the next macroinstruction, the content of the CSP register is not decremented and the CTOS register is loaded with the address for the macroinstruction after that.

There is a favourable function implemented called trapping. This forces the function PUSHJ so that the content of the NPC register gets saved. Slow-jump does the same. If we leave by trapping a POPJ function, we change it and increment the CSP register content rather than decrementing it. The CTOS register gets loaded with the NPC register content that we saved.

The control stack may be incremented without fetching the content from it by specifying POPJ but not specifying for the control-memory address to come from the CTOS register.

To sum up what happens on the next control stack pointer NEXT CSP lines, which are both the input to the CSP register and the address for control stack CSTK, we first ignore tasking to keep things simple:

In the first half of each cycle, the NEXT CSP lines contain the value CSP+1 which is the content of the CSP register incremented.

In the second half of each cycle, the NEXT CSP lines contains the value CSP normally, but contains the value CSP-1 in the event of a function POPJ or the value CSP+1 in the event of a function PUSHJ. A POPJ function that causes the next instruction signal NEXT INST generates the value CSP rather than the value CSP-1. A trap function or slow jump function generates the value CSP+1, like the PUSHJ function. The first half cycle is a write and the second half cycle is a read function.

In the first half of each cycle, the high bits represent the current task; in the second half the high bits represent the next task and the low bits get swapped with the next task's control stack pointer.

For returning out of a trapped instruction, it is necessary to set the content of the CSP register back to -1. This is done by switching the CTOS CAME FROM IFU skip condition, which is true when the content of the CSP-register equals -1 and this means performing the emulator task. The POPJ function can be performed (without using the CTOS as the microinstruction address source) until this condition becomes true.

Further details on the Microcode Control of Sequencer SQ and Micro Code are given in tables No. 1.1, 1.2; 6.1, 6.2; 7, 8.

The clocking circuitry effects controls of the tasking of the machine.

The data path board always gets an ungated clock. Decoding of the microinstruction is modulated by a no data passing NDP function where necessary.

The NPD function is the function no operation NOP due to performing a trap function, due to the machine waiting function (see below), or due to the machine being stopped, either by the front end processor FEP stopping it or by a parity error being detected or by a halt microinstruction being performed. The waiting function is a kind of temporary stop. When the machine is waiting it continuously executes the same microinstruction without side-effects, until either the wait condition goes away or the machine switches tasks (other tasks might not need to wait). Upon return from the task switch the same microinstruction is executed again. Waiting is used to synchronize with the memory and instruction fetch unit IFU; a wait function occurs if the data path control circuitry asks for data from memory that hasn't arrived yet in the temporary memory control, or if an attempt is made from a source to start a memory cycle when the memory is busy.

Futher waiting occurs, if an attempt is made to do a microdevice operation when the Lbus is busy, or if the address from the instruction fetch unit IFU is being branched to (this is the last microinstruction of a macroinstruction) and the IFU circuit signalizes that the address being provided in the previous cycle is not the correct one.

The wait decision has to be made during the first half of the cycle, because it is used to gate the clock in the correlated gates.

- 30 -

A wait causes a NDP function, inhibiting side-effects of the microinstruction, but it is only partially inhibiting task switching in the sequencer. If a task switch was scheduled in the previous cycle, i. e. the TASK SWITCH signal is asserted, then the sequencer state which is given by the contents of the registers CPC, NPC, UIR, CSP is clocked from the new task's, but the old task's state is not saved; thus the current microinstruction will be executed again when control returns to this task. If no task switch was scheduled, the sequencer state remains unchanged and the microinstruction is immediately retried.During a wait function new task wakeup funtions are still accepted and so the wait function can be interrupted by a higher-priority task; when that task dismisses the waiting microinstruction will be retried.

A trap function causes a NDP function, inhibiting the side-effects of the current microinstruction, but when a trap function occurs, the sequencer still runs. The current cycle is stretched to double-length so that the control-memory address can be changed correctly to the trap address. Trapping interacts correctly with tasking. The current cycle is still stretched to double length when though the actual control-memory address is not changing. The revised contents of the NEXT CPC lines (the trap address) gets written into the task-state memory TSKM.

Note that the NDP function is not valid before the leading edge of the clock, and cannot be used to gate the clock.

In order for the memory control circuit MC, which needs to decide whether to start a memory cycle well in advance of the clock, to work, the following precautions are being taken.

The NDP function signals actually consists of an early component and a late component. The early component reasons for the NDP signals are stable by less than e. g. 50 ns after the clock stroke and can inhibit the starting of a memory cycle. These include the machine being halted, the LBUS WAIT function signal, and a wait function due to interference for the Lbus. The latter signal is actually a little slower, but the memory control circuit MC gets it earlier then the NDP signal itself and hence stabilizes sooner.

The late component reasons for the NDP signals are always false while the clock is de-asserted. After the leading edge of the clock, the NDP signals will come on to prevent side-effects of the current microinstruction. If a memory cycle has been started, it cannot be stopped, however a write function signal will be changed into a read function signal. Except when there is a map miss function, then the NDP function will stop it before the trailing edge of the clock. The late component reasons for the NDP signals are trap functions, parity error functions, and half microinstruction functions. All hardware errors are relatively late because to perform the control-memory parity function takes quite long, but it is desirable to stop before executing the bad microinstruction rather than after, so that wrong parity in control memory is being used with a microcode breakpoint mechanism.

Control-memory parity is computed quickly enough to manage to stop the sequencer clocks, but not quickly enough to turn on the NDP function and distribute it throughout the processor -- and all the signals that derive from the NDP signals before the leading edge of the clock.

All this is implemented by having a variety of clocks on the memory-control and sequencer board, gated by various conditions, the main signals and circuitry is listed here:

CLK       -   the main clock, which never stops.

SQ CLK    -   (sequencer clock) clock for the main sequencer state (CPC, NPC, CSP, CUR TASK). This is stopped by the WAIT function signal unless switching tasks is performed.

UIR CLK  . -   (micro instruction clock) like SQ CLK but also clocked by single-step even if the sequencer stepping function is not enabled.

TSK CLK   -   (task clock) like SQ CLK but not stopped by the WAIT function.

TSKC CLK  -   (task state capture clock) clock for the task-state-capture register. Like SQ CLK but always stopped by the WAIT function.

The control stack register CTOS ist clocked by TSK CLK.

Table 2 shows clocking conditions assuming the machine is not stopped by a front end processor FEP signal and not stopped by an error signal.

When the machine is stopped, it is possible to single-step the sequencer circuit and the data path sircuit either separately or together, and to read and write the microinstruction register UIR without disturbing any state. This makes it possible to save and restore the complete state (save the content of the microinstruction register UIR, step just the sequencer circuit to bring all of its state information to the so called spy bus, then execute microinstructions to read the data-path circuit state).

It is possible to run by a control signal the machine at full speed with the control stack CSTK disabled, so that the micro instruction register UIR doesn't change, thus making one-microinstruction scope loops. It is also possible to run by another control signal the data path DP at full speed with the sequencer stopped.

The front end processor FEP controls this via the control register on a sequencer clock circuit SQCLKC, which is cleared when the machine is reset, the functions are:

| | |
|---|---|
| 0 RUN | Set to 1 to let the machine run freely |
| 1 STEP | Set to 0 then to 1 to clock the machine once |
| 2 ENABLE DP | If 0, STEP doesn't affect the data path DP |
| 3 ENABLE SQ | If 1, STEP and RUN don't affect the sequencer except the micro instruction register UIR |
| 4 ENABLE CHEM | if 1, UIR register is loaded from the control memory CMEM, else from CMEM WD register |
| 5 CMEM WRITE | If 1, write control-memory CMEM |
| 6 ENABLE TRAP | If 1, trap conditions set NOP function and change address of CMEM |
| 7 ENABLE ERRHALT | If 1, parity error will inhibit RUN function |
| 8 ENABLE TASK | If 1, enables task scheduling, if 0 the |
| 9 - 12 TASK | task number is forced from these bits present |
| 13 ENABLE WP | Enable write-pulse to task memory TSKM and control-stack memory CSTKM |
| 15, 14 | spare. |

When writing control-memory CMEM, the CMEM ENB signal is 0 to inhibit the output signals from going out and the trapping function is disabled so that the control-memory address CMEMA is stable. Normally the micro instruction register content UIR would be set up to source the appropriate address.

The trapping function i.e. branching to a special address and, applying the NOP-function, does not occur if the trap enable signal TRAP ENB is zero.

When the sequencer is stopped, the following register contents do not change:

CSP, CPC, NPC, CTOS, CUR TASK.

The following state do not change when the sequencer is stopped, except that single-stepping changes them regardless of the enable sequencing ENABLE SQ signal:

. UIR.

Applying the functions,disable control memory CMEM and storing the appropriate value in the control memory write CMEM WD register, which will then be loaded into UIR,preserves the UIR register content.

The task registers are clocked on every clock, regardless of whether the sequencer is running. These are the registers after the task memory TASK CSP, TASK NPC, TASK CPC. The registers before the task memory TSKC, TSKM WA are clocked only if the state of the sequencer is to be saved, i.e. if the sequencer is running or being single-stepped and the MC WAIT function is not true. All of the main sequencer state registers, including the current task, are clocked only when the sequencer is running. The front end processor FEP controls by a signal when the sequencer is running or single-stepping comes from the task scheduler wether the task chosen is performed or it can apply a task number.

Lastly the sequencer includes diagnostic circuitry including an error half circuit and a debug history circuit which is part of a Spy bus network.

The diagnostic interface which is advantageously implemented includes the Spy bus. This is an 8-bit wide bus which can be used to read from and write to various portions of the processor. The readable locations in the processor allow the front end processor FEP to "spy" on the operation of the central processor unit cpu, hence the name "Spy bus". Using the Spy bus, the FEP processor can force the main processor to execute microinstructions, for diagnostic purposes.

When diagnostics are not running, the FEP processor uses the Spy bus as a special channel to certain direct memory access DMA devices. Normally, the FEP processor uses the Spy bus to receive a copy of all incoming data transmission packets. It can also set up and transfer to the data transmission and read from the disk memory via the Spy bus.

Tables 3.1, 3.2; 5.1, 5.2; 7, show the Spy functions.

DATA PATH

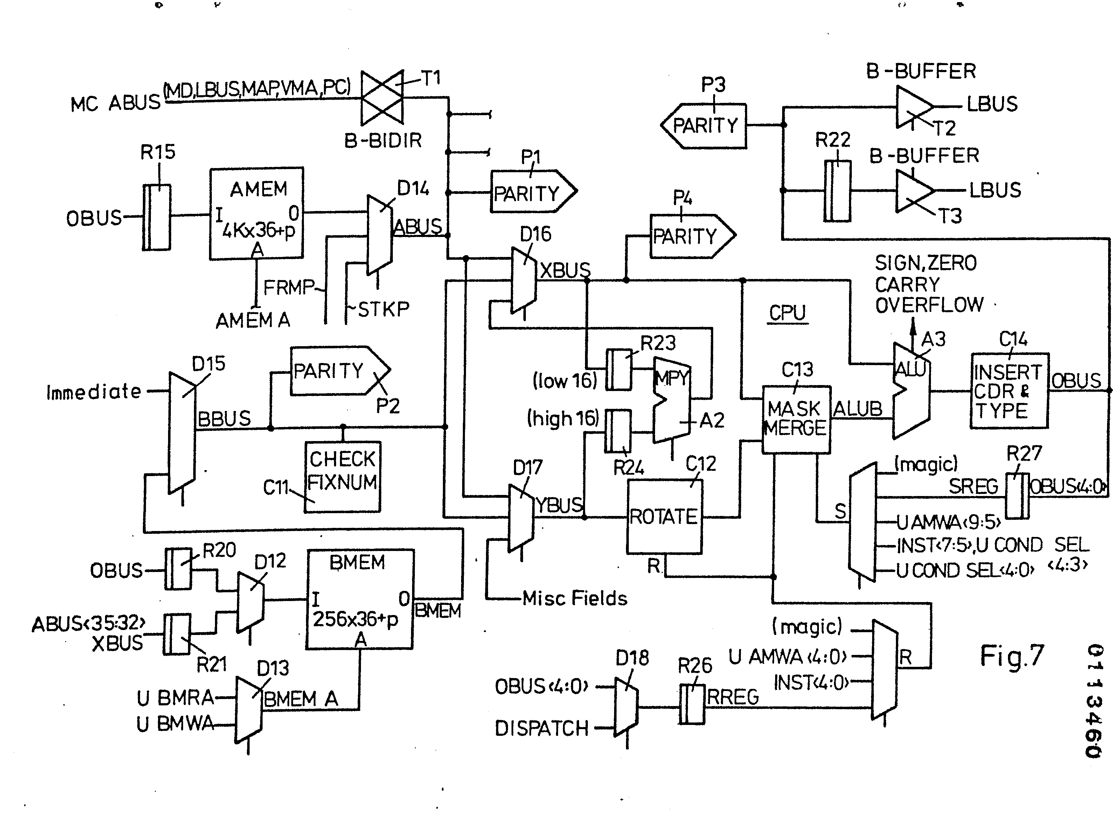

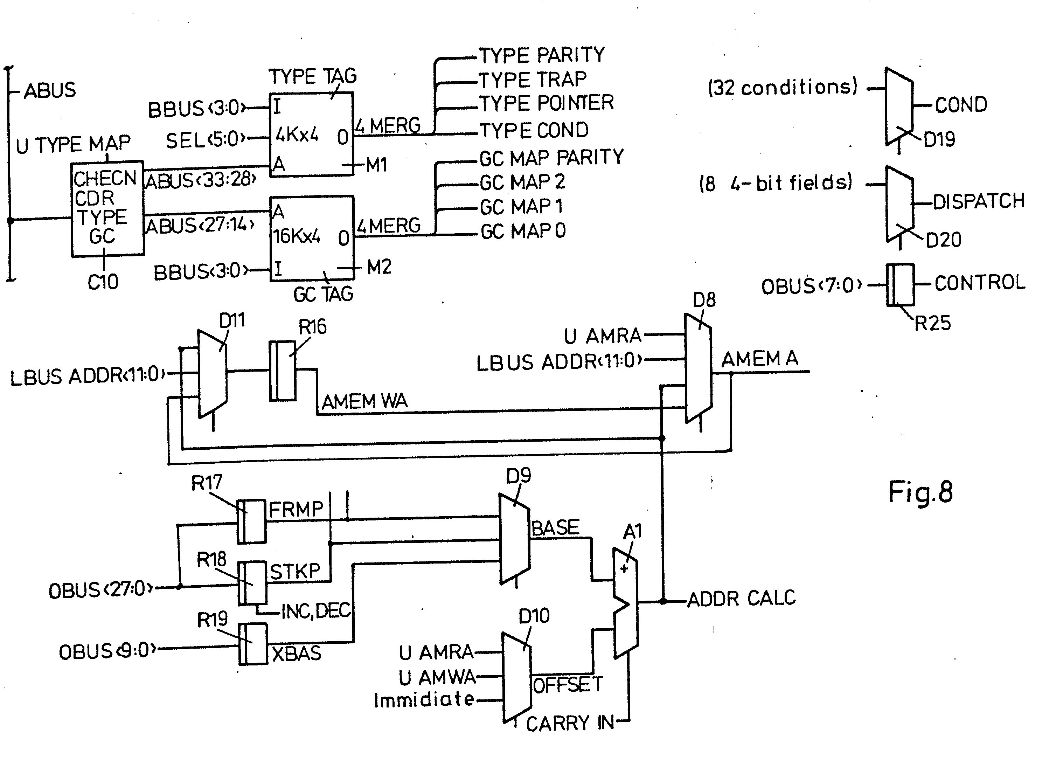

The data path DP unit is shown in block diagram form in Fig.7,8
with the various circuit elements.

The data path unit includes the stack buffers AMEM, BMEM, the
arithmetic logic unit ALU, the data typing circuitry C 14, the
garbage collection circuitry C10 and other related circuit
elements.

The A and B memories AMEM, BMEM include the two stack and buffers
described hereinabove. The A memory is a 4K x 40 bit memory
being connected with the related circuitry, such as the memory
address circuit D8 connecting to the Lbus, the address registers,
the address calculation circuitry, the write address circuitry
and parity circuitry P1 and buffer circuitry R15, D14. The B
memory which is a 256 x 40 bit memory with the corresponding
circuitry therefor D13,D12,R20,R21,D15,P3.

The data path also includes the hardware for carrying out typing
C14 and type checking C10 including the shifter for bits 0-31,
the masking and merging circuitry and the arithmetic and logic
unit ALU and its related circuitry, the multiplier and the
XBUS, YBUS and 0 Bus circuitry and related clock circuitry.

Further, there are the stack pointer circuitry STKP, the frame
pointer FRMP, and data type tagging M1 circuitry, the garbage
collection circuitry M2, and trap control, condition dispatch
and microinstruction decode circuitry, a base register XBAS
and select circuitry D9.

The ALU A1 is used to carry out the arithmetic combination of a given address and offset and is dedicated solely thereto. As can be seen from the data flow path in the block diagram of Fig. 8 , the circuitry C10 on the data path unit separates the type field from the data object and thereafter checks the type field with respect to the operation and generates a new type field in accordance with the operation. The new type field and the results of the operation are combined thereafter in the circuitry C14(Fig. 7).

The central processing unit (cpu or processor) exemplifies a tagged architecture computer wherein type-checking is used to catch invalid operations before they are performed. This ensures program reliability and data integrity. While type.checking has been integrated into many software compilers, the present system performs automatic type-checking in hardware, specifically the above-mentioned circuitry C10 in the sequencer. This hardware allows extremely fast type-checks to be carried out at run-time, and not just at compile-time. Run-time type-checking is important in a dynamic Lisp environment, since pointers may reference many different types of Lisp objects. Garbage-collection algorithms (explained hereinafter) also gain by fast type-checking.

Automatic type-checking is supported by appending a tag field to every word processed by the cpu. The tag field indicates the type of the object being processed. For example, by examining the tag field, the processor can determine whether a word is data or an instruction.

With the tagging architecture, all (macro)instruction are generic. That is, they work on all data types appropriate to them. There is, for example, only one ADD operation, good for fixed and floating-point numbers, double-precision numbers, and so on. The behavior of a specific ADD instruction is determined by the types of the operands, which the hardware reads in the operands' tag fields. There is no performance penalty associated with the type-checking, since it is performed in parallel with the instruction. By using generic instructions and tag fields, one (macro)instruction can do the work of several instructions on more conventional machines. This permits very compact storage of compiled programs.

In the present system a word contains one of many different types of objects, e. g. two basic formats of 36-bit words are provided.

One format, called the tagged pointer format, consists of an 8-bit tag and 28 bits of address. The other immediate number format consists of a 4-bit tag and 32 bits of immediate numerical data. (In main memory, each word is supplemented with 8 more bits, including 7 bits of error correction code ECC).

Two bits of every word are reserved for list compaction or so called cdr-coding. The cdr-code bits are part of a technique for compressing the storage of list structures, which are widely used in LISP programms.

The four possible values of the cdr-code are: normal, error, next, and nil. Normal indicates a standard car-cdr list element pair, next and nil represent the list as a vector in memory. This takes up only half as much storage as the normal case, since only the cars are stored. Zetalisp primitives that create lists make these compressed cdr-coded lists. The error value is used to indicate a memory cell whose address should not be part of a list.

34 data types are directly supported by the processor. The type-encoding scheme is as follows. A Zetalisp pointer is represented in 34 bits of the 36-bit word. The other two bits are reserved for cdr-coding. The first two bits of the 34-bit tagged pointer are the primary data typing field. Two values of this field indicate that the 32-bits hold an immediate fixed-point or floating-point number, respectively. (The floating-point representation is e. g. compatible with the IEEE standard). The other two values of the 2-bit field indicate that the next four bits are further data type bits. The remaining 28 bits are used as an address to that object. The object types in-clude:

- symbols (stored in four parts: print-name, value, function, and property-list)
- lists (cons cells)
- strings
- arrays
- flavor instances
- bignums (arbitrary-precision integers)
- extended floating-point numbers
- complex numbers
- extended complex numbers
- rational numbers
- intervals
- coroutines
- compiled code
- closures
- lexical closures
- nil

The present-system is stack-oriented, with multiple stacks and multiple stack buffers in hardware. Stacks provide fast temporary storage for data and code references associated with programs, such as values being computed, arguments, local variables, and control-flow information.

A main use of a stack is to pass arguments to instructions, including functions and flavor methode. Fast function calling gives the ernormous improvement to the performance of cpu-bound programms in this machine. The use and layout of the stack for function calling in the system is novel and inventive.

In the system, a given computation is always associated with a particulat stack group. Hence, the stacks are organized into stack groups. A stack group has three components:

- A control-stack -- contains the lambda bindings, local environment, and caller list.
- a binding-stack -- contains special variables and counter-flow information.
- A data-stack -- contains Lisp objects of dynamic extent (temporary arrays and lists).

In the system, a stack is managed by the processor hardware in the sequencer as set forth above. Many of the system instructions are stack-oriented. This means they require no operand specification, since their operands are assumed to be on the top of the stack. This reduces considerably the size of instructions. The use of the stack, in combination with the tagged architecture features, also reduces the size of the instruction set.

The control stack is formatted into frames. The frames usually correspond to function entities. A frame consists of a fixed header, followed by a number of argument and local variable slots, followed by a temporary stack area. Pointers in the control stack refer to entries in the binding stack. The data stack is provided to allow you to place Zetalisp objects in it for especially fast data manipulations.

Active stacks are always maintained in the stack buffers by the hardware. The stack buffers are special high-speed memories inside the cpu which place a process's stack into a quick access environment. Stack buffer manipulations (e.g., push, pop) are carried out by the processor and occur in one machine cycle.

At the macroinstruction level, the system has no general-purpose registers in the conventional sense, as it is a stack-oriented machine. This means that many instructions fetch their operands directly from the stack.

The two stack buffers are provided in order to speed the execution of Zetalisp programs. The stack buffers function as special high-speed caches used to contain the top portion of the Zetalisp stack. Since most memory references in Zetalisp programs go through the stack, the stack buffers provide very fast access to the referenced objects.

The stack buffers store several pages surrounding the "current" stack pointer, since there is a high probability they will contain the next-referenced data objects. When a stack overflows or underflows the stack buffer, a fresh page of the stack buffer is automatically allocated (possibly deallocating another page).

Another feature of the stack buffers which support high-speed access is the use of hardware-controlled pushdown pointers, eliminating the need to execute software instructions to manipulate the stack. All stack manipulations work in one cycle. A hardware top-of-stack register is provided for quick access to that location at all times.

The stack buffer has some area thereof which is allocated as a window to the stack, which means that somewhere in the main memory is a large linear array which is the stack that is being currently used an this window points into some part of it so that it shadows the words that are in actual memory. The window is addressed by a two segment addressing scheme utilizing a stack pointer and an offset. The ALU A1 associated with the stack buffer AMEM, combines the pointer and offset in one cycle to address the window in the stack buffer.

In a Lisp environment, storage for Lisp objects is allocated out of a storage area called the heap in virtual memory. Storage must be deallocated and returned automatically to the heap when objects are no longer referenced. In order to manage the dynamic storage allocation and deallocation, storage manager and garbage collection routines must be implemented. Garbage collection is the process of finding "unreferenced" objects and reclaiming their space for the heap. This space is then free to be reallocated.

The goal of a good garbage collection algorithm is to reclaim storage quickly and with a minimum of overhead. Conventional garbage collection schemes are computationally costly and time-consuming, since they involve reading through the entire address space. This is done in order to prove that nowhere in the address space are there any references to the storage being considered for reclamation. The design of the present system includes unique features for hardware assistance to the garbage collection algorithms which greatly simplify and speed up the process. These hardware features are used to "mark" parts of memory to be included in the garbage collection process, leaving the rest of memory untouched. These hardware features include:

-   Type fields which indicate pointers
-   Page Tag which indicate pages containing pointers to temporary space
-   Multi-word read instructions which speed up the memory scanning.

The 2-bit type field inserted into all data words by the hardware simplifies garbage collection. This field indicates whether or not the word contains a pointer, i. e., a reference to a word in virtual memory.

For each physical page of memory there is a bit called a page tag. This is set by the hardware when a pointer to a temporary space is written into any location in that page. When a disk page is read into a main memory page and after a garbage-collcetion cycle, the microcode sets the bit to the appropriate value. When the garbage-collector wants to reclaim some temporary space, it scans the page-tag bits in all the pages. Since the page tag memory is small relative to the size of virtual memory, it can be scanned rapidly, e. g. at 1 ms per Mword of main memory that it describes. For all pages with the page-tag bit set, the garbage collector scans all words in that page, looking for pointers to "condemned" temporary space. For each such pointer it copies out the object pointed to and adjusts the pointer.

Multi-word read operations speed up the garbage collection by fetching several words at a time to the processor.

The virtual memory architecture assists garbage collection with another new mechanism. If a page with its page-tag bit set is written to disk, the paging function performs scanning through the contents of the page stating what it points at. Then it creates a table recording the swapped-out pages which contain pointers to temporary spaces in memory. Since the garbage collector checks this table, it locates those pages containing such pointers. This improves the efficiency of the garbage-collection process, since only the pages with temporary-space pointers are read into memory during garbage collection.


Page Tag Implementation


The page tag bits are stored in 16K static RAM circuits. The following inputs exist:

| | |
|---|---|
| LBUS ADDR 23:19 | – the physical page to be accessed next. |
| NORMAL ACTIVE L | – true if this is an active cycle |
| LBUS STATE CLK L | – the clock gated by LBUS WAIT. |
| DP SET GC TAG L | – true during an active cycle if the datapath DP output during the previous cycle was a pointer and its address was in a temporary space. If this active cycle is for a·virtual write, the garbage collect GC tag bit needs to be set. |
| WRITE ACTIVE L | – true during an active write cycle (register stored version of the LBUS WRITE L signal). |
| WRITE PAGE TAG L | – true if lbus-dev-write of the page tag being done. |
| READ PAGE TAG L | – true if reading page tag (via lbus-write). |
| LBUS DEV 4:3 | – modifiers for the above. |

- 45 -

The following outputs exist:

| LBUS DEV COND L | - Asserted when READ PAGE TAG and the selected tag bit is set. |
| PAGE TAG PAR ERR L | - asserted when bad parity is read from the page tags. |

Microcode control:

Under microcode control a physical page is selected when doing a read of any location in the page. Normally the address would be supplied as a physical address via one of the internal busses called the ABUS although the virtual memory address circuit VMA could also be used and further via the Lbus. Except by a read function there is a direct control function to activate the memory control MC circuit to put the physical address on the Lbus. In the next cycle an micro operation is done to read or write the page tage for the addressed page.

Since the address is supplied in the previous cycle before the read and write, the task switch is prevented from intervening. This is done by specifying the SPEC TASK-INHIBIT function in the microinstruction-before-the one that emits the address on the ABUS lines. It is also possible for an memory access by the front end processor FEP to intervene between the two microinstructions, i. e. the micro operation may have to wait for the Lbus to become free. The page tag's address register is not clocked when the function memory controller wait MC WAIT is asserted, which takes care of this problem.

The function WRITE PAGE TAG L is asserted during second half of the cycle when a writing to microdevice at slot 36, subdevice 1 on the FEP processor is called.

The state of the bus line LBUS DEV 3 is written into the selected bit. The others remain unchanged.

The state of the bus line LBUS DEV 4 selects which bit is to be written in

    0    the garbage collect gc tag bit

    1    the referenced bit

The function READ PAGE TAG L is asserted when writing to microdevice at slot 36, subdevice 3 is wanted.

The state of the bus lines

| LBUS DEV | 4:3 | | select the bit to be read, as follows: |
|---|---|---|---|
| | 00 | – | the garbage collect gc tag bit |
| | 01 | – | the referenced bit |
| | 10 | – | the parity bit |
| | 11 | – | (not used) |

The preselected bit state comes back on the bus line LBUS DEV COND L line and it may be used as a so called skit condition.

A scanning of the garbage collection GC page tag takes place at the rate of 2 machine cycles per scanned bit. This amounts e.g. to 1 millisecond per 750K of main memory. The microcode alternates between cycles which emit a physical address on the ABUS lines, start a read, and do a compare to check for being done, and cycles which increment the physical address and also skit on the tag bit, into either the first cycle again or into the start of a word scanning loop.

There is no special function for writing a pointer into the main memory MM to enable the check and setting of the garbage collect    page tag. Instead, any write into main memory at a virtual address, where the data type map says the type is a
pointer, and the garbage collect    map says it points at temporary space, will set the addressed garbage collect  · page
tag bit in the following cycle if necessary.

The stack pointer, frame pointer and base registers STKP, FRMP,
and XBAS can be used to address the A-memory AMEM. The low 10
bits of one of these registers are added to a sign-extended
8-bit offset which comes from the microinstruction or the macroinstruction. The result is then concatenated with a 2-bit stack
baseregister to provide a 12-bit A-memory address. The microcode
can also select a 4th pseudo base register, which is either
the frame pointer or stack pointer register FRMP or STKP depending
on the sign of the macroinstruction offset. Doing this this
function also adds a 1 in the address calculator A1 to the offset
if it is negative. Thus you always use a positive or zero offset
with the frame pointer and a negative or zero offset with the
stack pointer in this mode.

The stack pointer points at the top of the stack. The frame
pointer points at the current frame.

The stack pointer may be incremented or decremented independently
of almost everything else in the machine, and there is a 4-bit
counter which clears at the beginning of a macroinstruction
and is incremented or decremented simultaneously with the stack
pointer: this allows changes by plus or minus 7 of the stack
pointer to be undone when a macroinstruction is aborted (polsred).

The stack pointer and frame pointer registers STKP, FRMP are
28-bit long, holding virtual addresses, and they may be read
onto the data path. The base register XBAS is only 10-bit long
and may not be read back. (The front end processor FEP can read it back indirectly by using it as a base register and checking what address develop). The virtual address select register XVAS is not used by most of the normal microcode. but it is there as a provision for extra flexibility. The microcode which is doing the so called BLT function on blocks of words up and. down in the stack (used by function return. for example). needs two pointers to the stack. It uses tne frame and tack pointers. but might be changed to use tne base address and the stack pointer. The so called function "funcall" (function call with variable function) microcode uses the base register XBAS to hold a computed address which is then used to access the stack.

Interface witn Memory Control MC circuitry (e.g. being on one board).

The data path DP and the meory control MC need to communicate with each other for the following operations:

⁻Reading tne virtual memory address VMA and program counter PC registers into the data path DP unit.

⁻Writing the virtual memory address VMA and program counter PC registers from the data path DP unit.

Accessing the address map (at least writing it). Reading main memory MM or memory mapped I/O device. Writing main memory MM or memory mapped I/O device. Emitting a physical address. especially in a direct memory access "DMA" task.

Using the bus to access devices such as floating-point unit and doing "microdevice" (non-memory-mapped) I/O, and setting the garbage collect page tag bit when a pointer is written into the memory.

The memory controller MC does its own microinstruction decoding. There is a 4-bit field just for it, and it also reacts on the function fields: Spec, Magic, A Read Address, and A Write Adress. The A address fields have 9 bits each available for the memory controller MC when the source (or destination) is not the A-memory AMEM, which is normally the case when reading (or writing) of the memory controller MC is done. Also the A-memory write address can by microcode control be taken from the read address field, freeing the write address field for use by the memory controller MC. This occurs during the address cycle of a direct memory access DMA operation, which increments an A-memory location but also hacks the memory controller MC. The memory controller MC and the sequencer also have communication, mostly for synchronization and for the instruction fetch unit IFU control.

The following signals connect between the data path unit DP and memory controller MC boards:

BK ABUS  35:0             - 36 bit wide bidirectional extension path's Abus. This is used to read virtual memory address VMA, program counter PC, map, and memory (or bus) data into the data path DP, and to emit physical addresses from the data path. Bits 31-0 are bidirectional, but bits 35-32 are unidirectional, they always go from the memory control MC unit to the data path DP; this allows the so called cdr code of a memory location to be merged into the data to be stored,

which needs to be on the ABUS so
it can get to the type and garbage
collect maps.
The parity bits on the internal
Abus do not connect to the memory
controller MC.

LBUS 35:0 — the main data bus. The data path
DP can drive this either directly
or through a register R22 . This
is used when writing into the main
memory MM, when writing the bus
content, and when writing registers'
contents onto the memory control
MC board. The error-correction bits
do not connect to the data path DP.

LBUS ADDR 11:0 — physical memory address into the
data path. This is used when a supposed
main memory access actually refers
to internal A memory. See below.

MC OBUS TO LBUS L — a data path DP result from this
cycle drives LBus.

MC OBUS REG TO LBUS L — a data path result from last cycle
drives the LBUS.

GC TEMP L — to garbage collect page tag bit
circuit. If this is asserted at
the end of a cycle which writes
into main memory MM, then during
the following cycle, which is when
the write actually happens, the
garbage collect page tag bit for
the page being written into it is
turned on.

MC ADDR IN AMEM L   — Asserted if the last memory address selected by this task (need only work for emulator) points at A-memory. The data path uses this to enable A-memory instead of the bus BK ABUS for memory reads, and to enable A-memory writing for memory writes. See below.

ABUS OFFBOARD L    — Asserted if the bus BK ABUS is an input to the data path. The data path circuit DP drives the bus BK ABUS whenever it isn't receiving it.

SEQUENCE BREAK     — Forces the instruction fetch unit IFU to generate a bogus instruction to take the sequence break (macro-code interrupt).

The data path works on bus delivered informations in such a way that when a memory reference is redirected to the A-memory, the memory control will provide the right address on the Lbus address lines.

For writing, things are simple. In the first cycle, the data $path_h$computes to write data; in the second cycle the write data is driven onto the Lbus, where it gets error-correction bits added. The memory card swallows the address at the end of the first cycle and the data during the second. The A-memory gets to the same timing; in the first cycle the address comes from the Lbus and the data come from the Obus inside the data path called the OBUS; in the second half of the second cycle the actual write is performed from the A-memory pipelining registers R16,R15.

The trap control circuitry of Fig. 2 effects the feature of trapping out of macrocode instruction execution. For example a page table miss trap to microcode looks in the page hash table in main memory MM. If the page is found, the hardware map is reloaded and the trap microinstruction is simply restarted. A so called PCLSR function of the current instruction happens only if this turns into a fault because the page is not in main memory or a page write-protected fault.

Another trap is when there is an invisible pointer. This trap to microcode follows the invisible pointer, changing the virtual memory address and retries the trap to microinstruction.

Memory write traps include one which is a trap for storing a pointer to the stack, which traps to microcode that maintains the stack garbage collect tables. This trap aborts the following micro instruction, thus the trapped write completes before the trap goes off. The trap handler takes the virtual memory address and the data that was written into the memory at that address, makes entries in the tables and then restarts the aborted microinstruction. If it is necessary to trap out to microcode, there are two cases. If the write was at the end of a macroinstruction, then that instruction was completed and the following instruction has not started since its first microinstruction was aborted by the trap. However, the program counter has been incremented and the normal PCLSR function will leave things in exactly the right state. In the other cases where the write was not at the end of a macroinstruction, the function is PCLSR, performed with the state in the stack and in the first part done flag.

Another traps are a bad data type trap and an arithmetic trap wherein one or both of the operands of the numbers on which the arithmetic operation is taking place is a kind of number that the microcode can not handle correctly. The system first coerces the operands to a uniform type and puts them in a uniform place on the stack. Thereafter a quick external macrocode routine for doing this type of operation on that type is called. If the result is not to be returned to the stack, an extra return address must be set up so that when the operation routine returns, it returns to another quick external routine which moves the result to the right place.

Stack buffers traps occur when there is a stack buffer overflow. The trap routine does the necessary copying between the stack buffer and the main memory. It is handled as a trap to macrocode rather than being entirely in microcode, because of the possibility of recursive traps, when refilling the stack buffer it is possible to envoke the transporter and take page faults. When emptying the stack buffer, it is possible to get unsafe pointer traps.

## MEMORY CONTROL

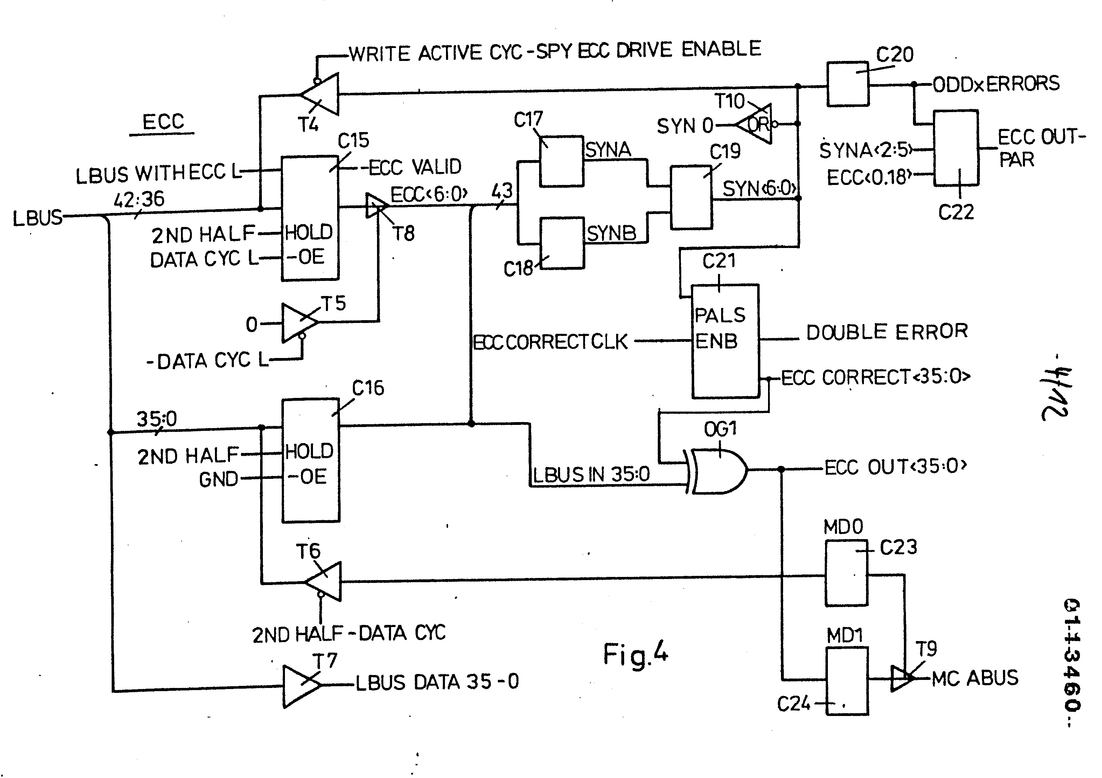

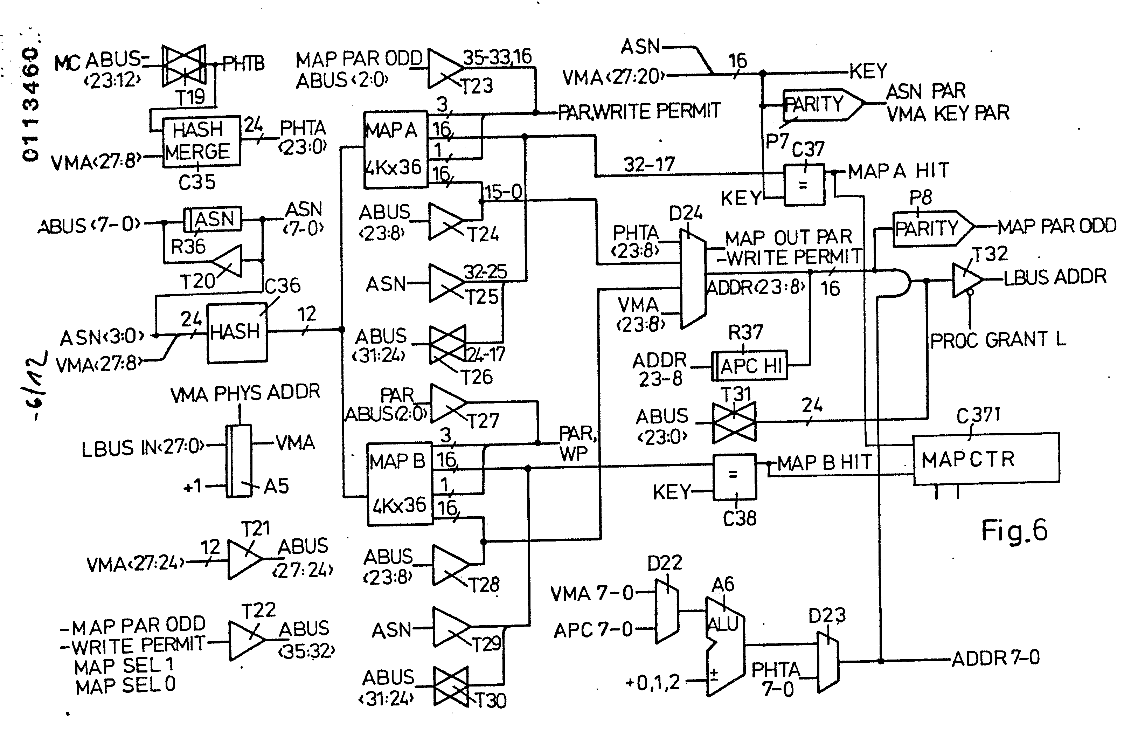

The memory control MC is shown in block diagram form in Figs. 4,5,6 which show the data and error correction circuitry ECC, the data path flow of the instruction fetch unit IFU and the page hash HASH mapping, the instruction fetch unit IFU includes the instruction aligner circuitry C32, the instruction cash IMEM, the instruction decoder IDECODE, the dispatch selector D21, the fetch address circuitry A4,C28, the miscellaneous control circuitry, the cash hit circuitry C31, the instruction register R32,R33,R34, the program counter R28 and the map and memory control circuitry.

The mapping function of the memory controller has the map control circuitry, the map address and output circuitry and the map parity P8. The page hash table probe address C35, the maps MAPA, MAPB, the map hashing C36 and tag comparing circuitry

- 54 -

C37,C38, and the virtual memory address VMA circuitry A5 is shown. The bus drivers are referenced with capital T and an index number.

Physical the main memory MM is addressed in 44-bit word units. This includes 36 bits for data, 7 bits for an error correction code syndrome plus one bit spare. Double-bit errors are automatically detected, while single-bit errors are both detected and corrected automatically in conventional manner. The memory is implemented using 64 Kbit dynamic RAM (random access memory) chips with a minimum memory configuration of 256 Kwords (1MByte) with 200 ns access time, which is one cycle time. The write cycle is about 600 ns (three bus cycles). In some cases the system can get or set one word per cycle (200 ns), and access a word in two cycles.

The system 28-bit virtual address space addresses 44-bit wide words (36-bits of data and 8 bits of the ECC syndrome and spares). This address space is divided into pages, each containing 256 words. The upper 20 bits of a virtual address are called the Virtual Page Number, and the remaining 8 bits are the word offset within the page. Transfers between main and secondary memory are always done in pages. The next section summarizes the operation of the virtual paging apparatus.

The virtual memory scheme is implemented via a combination of Zetalisp code and microcode. The labor is divided into policies and mechanisms. Policies are realized in Zetalisp; these are decisions as to what to page, when to page it, and where to page it to. Mechanisms are realized in microcode; these constitute decisions as to how to implement the policies.

Zetalisp pointers contain a virtual address. Before the hardware can reference a Zetalisp object, the virtual address must be translated into a physical address. A physical address says where in main memory the object is currently residing. If it is not already in main memory, it must either be created or else copied into main memory from secondary memory such as a disk. Main memory acts as a large cache, referencing the disk only if the object is not already in main memory, and then attempting to keep it resident for as long a it will be used.

In order to quickly and efficiently translate a virtual address into a 24-bit physical address, the system uses a hierarchy of translation tables. The upper levels in the hierarchy are the fastest, but since speed is expensive they also can accommodate the fewest translations. The levels used are:

- Dual Map Caches which reside in and are referenced by the hardware and can each accommodate 4 K entries.
- A Page Hash Table Cache which resides in wired main memory and is referenced by the microcode with hardware assist. The size of the PHTC is proportional to the number of main memory pages, and can vary from 4 to 64 Kwords, requiring one word per entry. However, the table is only 50% dense to permit a reasonable hashing performance.
- A Page Hash Table and Main Memory Table which reside in wired main memory and are referenced by Zetalisp. The size of both of these tables are proportional to the number of main memory pages, with the PHT being 75% dense and the MMPT 100% dense. Both tables require one word per entry. The PHT and MMPT completely describe all pages in main memory.
- The Secondary Memory Page Table describes all pages of disk swapping space, and dynamically grows as more swapping space is used.

A virtual address is translated into a physical address by the hardware checking the Map Caches for the virtual page number.

If found, the cache yields the physical page number the hardware needs. If the VPN isn't in the Map Cache, the hardware hashes the VPN into a PHTC table index. and the microcode checks to see if a valid entry of the VPN exists. If it does, the PHTC yields the physical page number. Otherwise a page fault to Zetalisp code is generated.

The page fault handler checks the PHT and MMPT tables to determine if the page is in main memory. If so, the handler does whatever action is required to make the page accessible, loads the PHTC table and the least recently used of the two Map Cache, and returns. If the page is not in main memory, the handler must copy the page from disk into a main memory page. When a page fault gets to this point it is called a hard fault. A hard fault initializes the following functions:

1.  Find the virtual page on the disk by looking up the VPN in the SMPT table.

2.  Find an available page frame in main memory. An approcimate FIFO (first-in, first-out) pool of available pages is always maintained with some pages on it. When the pool reaches some minimum size a background process fills it by making the least recently used main memory pages available for reuse. If the page selected for reuse was modified (that is, its contents in main memory were changed so the copy on disk is different) it must be first copied back to disk prior to its being available for reuse. The background process minimizes this occurrence at fault time by copying modified pages back to disk periodically, especially those eligible for reuse.

3.  Copy the disk page into the main memory page frame.

4.  If the area of the virtual page has a "swap-in quantum" specified, the next specified number of pages are copies into available main memory page frames as well. If these prefetched pages are not referenced within some interval and some page frames are needed for reuse, their frames will be reused. This minimizes the impact of prefetching unnecessary pages.
5.  Update the PHT, MMPT, PHTC tables, and least recently used of the two Map Caches to contain the page address of the page just made resident, and forget the previous page address whose frame was used.
6.  Return from the fault and resume program execution.

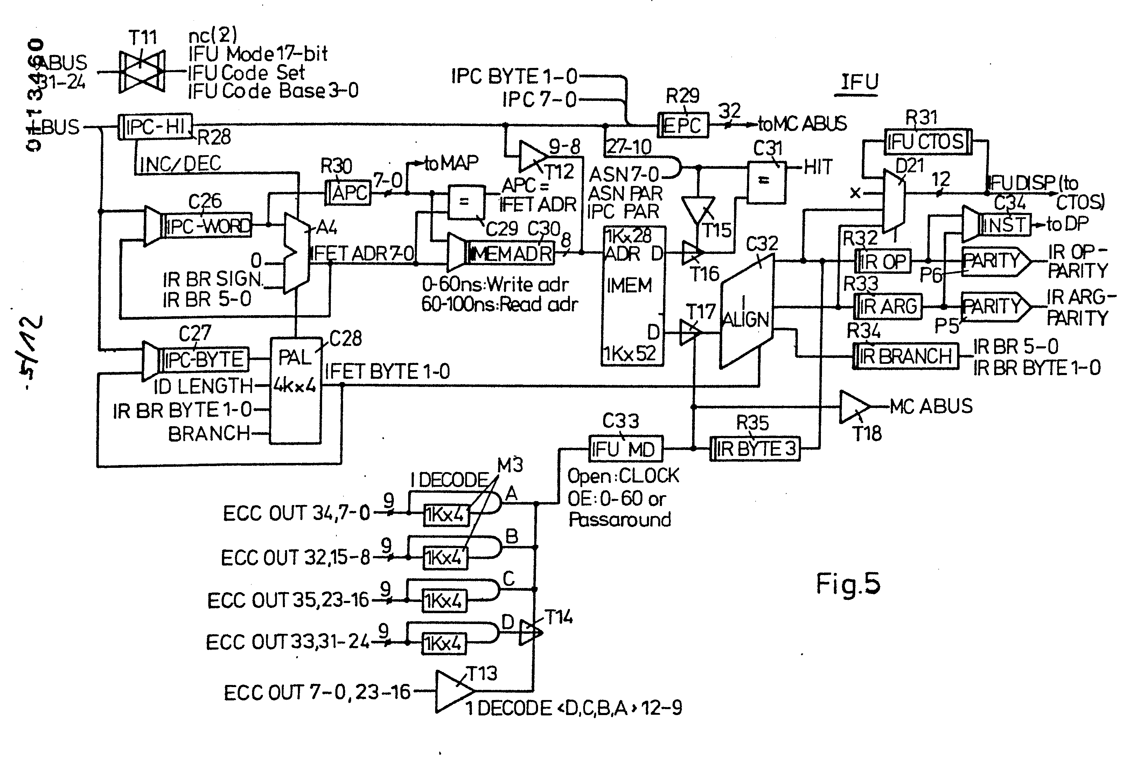

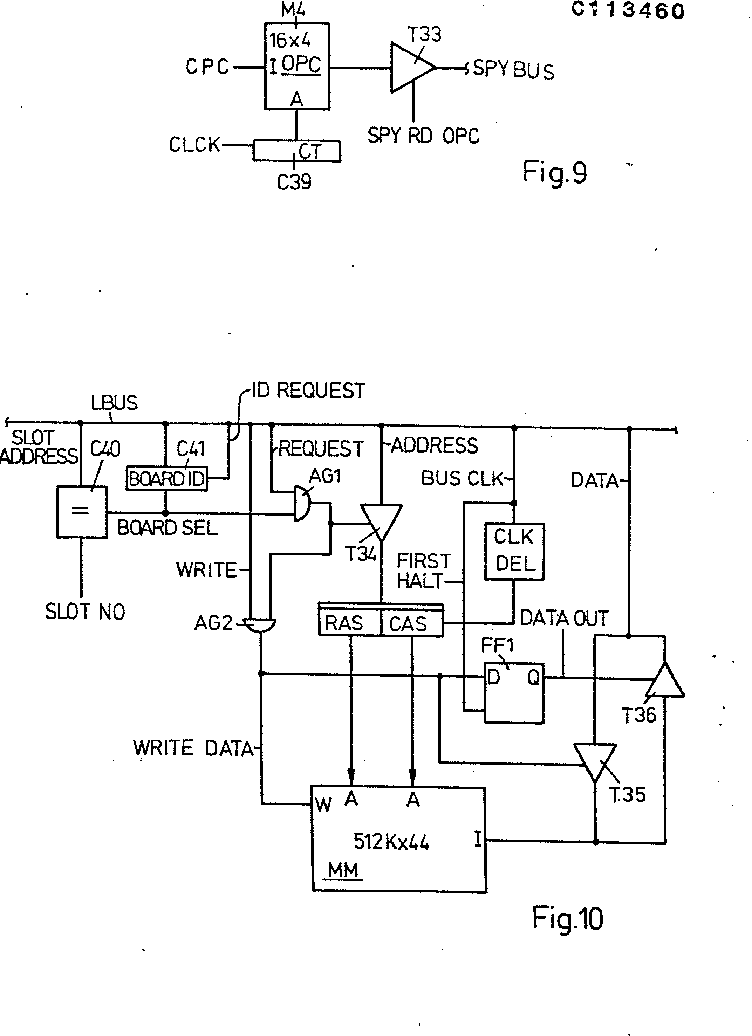

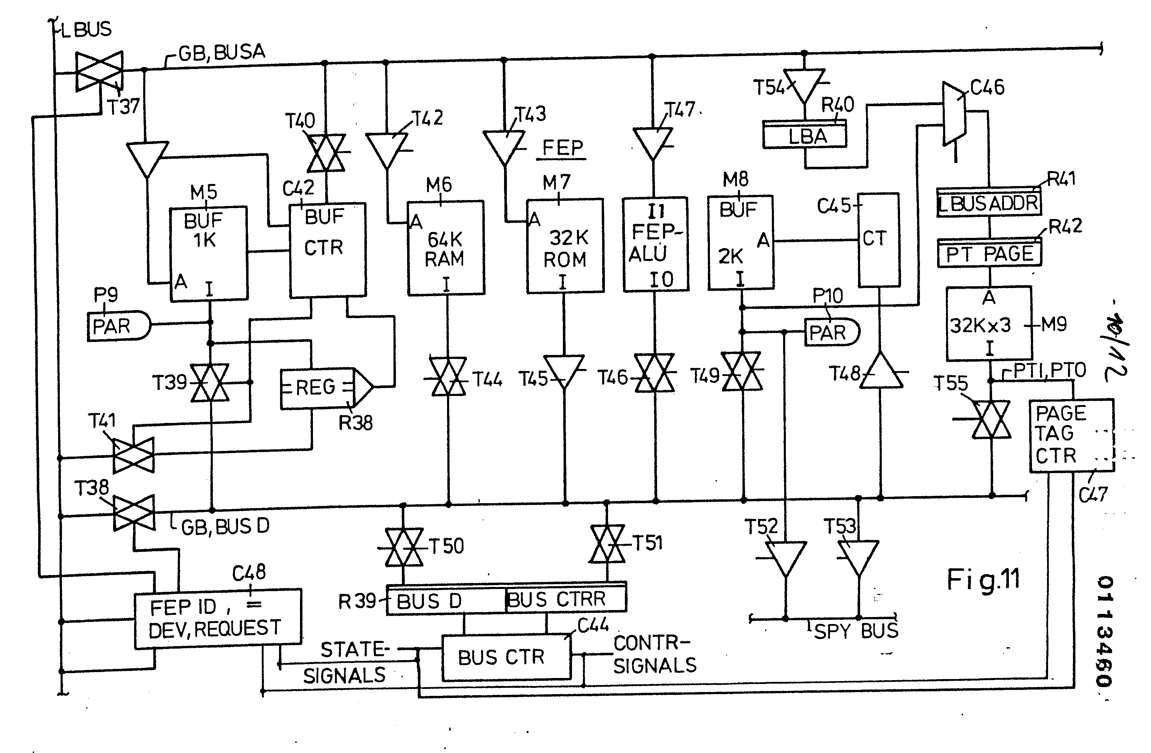

The central Memory Control MC unit manages the state of the Lbus and arbitrates requests from the processor, the instruction fetch unit IFU, and the front end processor FEP, using circuitry included therein as shown in Figs. 5, 11.

For general communication with devices, the Lbus acts as an extension of the system processor. Main memory MM and high speed peripherals such as the disk, communication network, and video terminal controllers and the front end processor FEP are interfaced to the Lbus. The address paths of the Lbus are 24 bits wide, and the data paths are 44 bits wide, including 36 bits for data and 8 bits for the ECC syndrome. The Lbus is capable of transferring one word per cycle at peak performance, approximately 20 MByte/sec.

All Lbus operations are synchronous with the system clock. The clock cycle is roughly 5 MHz, but the exact period of cycle may be tuned by the microcode. A field in the microcode allows different speed instructions for different purposes. For fast instructions, there is no need to wait the long clock cycle needed by slower instructions. Main memory and cpu operations are synchronous with the Lbus clock. When the cpu takes a trap, the clock cycle is stretched to allow a trap handler microinstruction to be fetched.

As an example of Lbus operation, a normal memory read cycle includes three phases:

1.  Request -- The cpu or the FEP processor selects the memory card from which to read (address request).
2.  Active -- At the memory card access of data occures, the data is strobed to an output latch at the end of the cycle.
3.  Data -- From the latches on the memory card the data are driven onto the bus; a new Request cycle can be started.

In a normal write operation, two phases are carried out:

1.  Request -- The cpu or the FEP processor selects the memory card to which to write.
2.  Active -- The cpu or the FEP processor drives the data onto the bus.

A modified memory cycle on the Lbus is used for direct memory access operation by Lbus devices. In a direct memory access (DMA) output operation, as in all memory operations, the data from memory is routed to the error correction circuit ECC. However, instead of passing on to the processor's instruction unit IFU, the data is shipped to the direct memory access DMA device (e.g., FEP processor, disk controller, communication network controller) that request it.

For block mode operation, the Lbus uses pipelining techniques to overlap several bus requests. On block mode memory writes, an address may be requested while a separate data transfer takes place. On block mode memory reads, three address requests may be overlapped within one Lbus cycle.

Memory and Clock Signals

The bus is used in three ways: accessing memory, accessing I/O device register which look like memory, and accessing "MicroDevices". MicroDevices are distinguished because they are addressed by a separate 10-bit field which comes directly from the microcode, and do not follow the 3 cycle Request/Active/Data protocol of memories. One example of such device is a DMA device such as the disk; the DMA task microcode commands the disk to put data onto the Lbus or take it off, while doing 3 memory cycles. We call the three classes of responders "Memory, MemoryDevices, and MicroDevices".

All transactions on the Lbus are synchronous with the system clock. For example, memory responds to requests with a 2 or 3 cycle sequence, viz:

On the first cycle (Request), the processor puts on address signal LBUS ADDR, puts the type of cycle on LBUS WRITE, and asserts LBUS REQUEST. All the memory cards compare the high bits of the LBUS address with their slot number. The selected memory card drives the row address onto the memory address lines, and at the leading edge of LBUS CLOCK starts row address select RAS. After a delay it feeds via a multiplexor the column address onto the memory address lines, and finally at the clock boundary column address select CAS is enabled.

The second (Active) cycle is used to access the memory: on a read the memory output is strobed into a latch at the end of the cycle; on a write, the bus has the write data and ECC bits and the RAM WE circuit is driven by a gated Lbus Clock (late write operation). The RAS and CAS flip-flops are reset at the end of this cycle.

During the third (Data) cycle, the lateched read data is driven on the Lbus (during First Half), the memory RAM chips precharge during their row address select RAS recovery time, and possibly a new Request cycle occurs.

The bus clock is designed so that the memory card can start row address select RAS with the leading edge and start column address select CAS with the trailing edge and be guaranteed of meeting the memory RAM timing specs. No other use is intended for the leading edge clock. It is suggested that MemoryDevice initiate response to requests at the trailing edge of clock.

The clock seen by devices on the Lbus (LBUS CLOCK) is a version of the clock that drives the processor. Its frequency is roughly 5 Mhz but the exact period of each cycle may vary between 180-260 ns depending on the cycle length specified by the microcode. Although the processor controls the cycle length, LBUS CLOCK is unaffected by any clock inhibit conditions in the processor -- operations on the bus proceed independently of the microcode, once they have been initiated. Memory data error-correction will also extend the clock for some period of time.

An exception to this is when the processor takes a trap. In that case the LBUS CLOCK cycle is stretched -- the extra time occurs in the second (or high) phase. While the main clock signal is held high, the clock and sequencer conspire to perform a second cycle internally that fetches the trap handler microinstruction. Because of this, two first-half clocks will happen for only one LBUS CLOCK. If the extended cycle is a Data cycle, the processor will latch the data seen during the first first-half.

A central Memory Control manages the state of theLbus and arbitrates between requests from the processor instruction fetch unit IFU, and the front end processor FEP. Both Memory and MemoryDevice are expected to conform to the same timing protocol.

Any Devices (like the TV) that are unable to respond in 3 cycles assert LBUS WAIT during the Active cycle until they respond. The memory control state will proceed on the first Active cycle where the signal LBUS WAIT is not asserted. All DMA devices also watch the LBUS WAIT signal, so they read or write their data when the Lbus is free.

Block mode operations. In some cases the processor issues a series of requests on back-to-back cycles. This is called "block mode". A new request can be started each cycle. When a block-mode operation is underway, the bus is segmented into a 3-stage pipeline, one stage for addressing, one stage for access, and one stage for data transfer (on reads).

The addresses of block mode requests are always in increasing sequential order. The existing memory card interleaves on bits 18,1,0, so an individual memory always gets at least 4 cycles between requests for sequential locations.

Other devices also handle block mode requests, so the microcode needs not in general distinguish references to memory from other devices. This means that the device accepts a request during its "active" cycle. Request cycles are unconditional, there is no way for a device to reject or delay a request. The cycle following a request is the active cycle, which can be repeated (via LBUS WAIT) until the device is ready to accept date (on writes) or enter the data cycle (on reads). Timing signals are listed in tables 4.1, 4.2.

Microdevice I/O is used for general communication with devices, for internal communication within the processor complex, including the front-end processor FEP, and for control of DMA operations.

For general communication with devices, the Lbus simply acts as an extension of the processor's internal bus. Data are transmitted within a single cycle and clocked at the trailing edge of the clock.

Microdevice read and write to slot number 36 is used for communication with the FEP, the page tags, and the microsecond clock. Microdevice read and write to slot number 37 is used for communication with the memory controller MC and sequencer SQboards. (It is used when reading and writing the next program count NPC register in the sequencer SQ board in order to reserve the Lbus and connect it to the datapath; the control signals to the sequencer SQ board are transmitted separately).

The DMA works as follows. A device requests a task wakeup when it wants to transfer a word to or from memory. The microcode task wakes up for 2 cycles. The first cycle puts the address on the Lbus address lines, makes a read or write request to memory, and also increments the address. The second cycle decrements the word count, to decide when the transfer is done. The microcode asserts the DISMISS signal during the first cycle (the task switching occurs after the second cycle). The device is informed of the DMA operation by the microcode through the use of a microdevice write during the first cycle. This microdevice write does not transfer any data to the device, but simply tells it that a DMA operation is being performed, and clears its wakeup request flag. (The wakeup request is removed from the bus immediately, and the flag is cleared at the clock edge). For a read from device into memory, the device puts the data on the bus during the active cycle (one cycle after the microdevice write) and it is written into memory. For a write, the device takes data from the bus two cycles after the microdevice write.

Some devices behave like memory, rather than like microdevice I/O. The criterion is generally whether the device is operated by special microcode, and the convenience and need for speed of that microcode. Devices that behave like memory can be accessed directly by Lisp code. The list of Spy signals is given in table 5.1,5.2.

Timing Requirements :

LBUS RESET and LBUS POWER RESET are asynchronous. All other side-effects take place at the trailing edge of the clock. LBUS REQUEST and the address lines are stable before the leading edge of the clock. LBUS WRITE however is only valid at the trailing edge of the clock; it can change as the result of a trap.

In a microdevice write, the address line signals (LBUS DEV 0-9) are stable throughout the cycle, however the date (LBUS 0-35) and LBUS WRITE itself are only valid at the trailing edge of the clock. The data lines are only driven during SECOND HALF:

In a microdevice read, the address line signals (LBUS DEV 0-9) are stable throughout the cycle, however LBUS READ signal itself is only valid at the trailing endge of the clock. The data (LBUS 0-35 or in some devices LBUS 0-31) are driven throughout the cycle.

TASK 8-15 REQ and TASK 4 REQ signals are asynchronous and may be driven at any time. Once a task is requested, it stays requested until explicitly dismissed or until LBUS RESET. When a task is dismissed, the task request is deasserted during the cycle that is dismissing, so that a new task of presumably lower priority can be scheduled. The task request flip-flop however is not be cleared until the trailing edge of the clock. During the cycle after a dismiss the task request will not be locked at by the processor.

Data driven onto the Lbus data lines (LBUS 0-43) are synchronized to the processor clock.

When a cycle is extended because of a trap, so that FIRST HALF cycle happens twice, the latch through which the processor receives Lbus data is only opened during the first FIRST HALF cycle. When a cycle is repeated because of LBUS WAIT signal memory-read data are only received from the bus during the first instance of the cycle. (This only happens when a block read is done from a device that uses LBUS WAIT signal since only in a block read can an active cycle and a data cycle coincide, and LBUS WAIT signal is associated with active cycles). Microdevice-write and memory-write data are driven during throughout an extended or repeated cycle (microdevice-write data are only driven during SECOND HALF cycle).

LBUS WITH ECC is driven with the same timing requirements as the data lines.
LBUS DEV COND is stable before the trailing edge of the clock.

SPY ADDR 5-0 are stable whenever SPY READ or SPY WRITE is asserted. The SPY data lines are clocked by the trailing edge of SPY WRITE, and are driven whenever SPY READ is asserted. If a bidirectional transceiver is used to bring the SPY bus onto a board, its direction is controlled by SPY READ, the front end processor FEP latches the SPY signal lines before it deasserts SPY READ signal. The front end processor FEP allows such a long time for a spy read or write, so that slow logic may be employed on this bus.

A main goal of the system architecture is further to execute one simple macroinstruction per clock tick. The instruction fetch unit IFU supports this goal by attempting to prefetch macroinstructions and perform microinstruction dispatching in parallel with the execution of previous instructions.

The prefetch PF part of the IFU circuit fills a 1Kword instruction cache, which holds the 36-bit instruction words. Approximately 2000 17-bit instructions can be held in the instruction cache. The instructions have a data type (integer). The IFU feeds the cache, takes the instructions, decodes them, and produces a microcode address. There is a table which translates a macroinstruction onto an address of the first microinstruction.

At the end of the clock tick the processor decides whether it needs a new instruction or it should continue executing microcode.

The machine instruction set corresponds very closely to Zetalisp. Although a user never programs directly in the machine instruction code it will be encountered when using the Inspector or the Window Error Handler. The instructions are 17 bits long. Seven instruction formats are used:

1. Unsigned-immediate operand -- This format is used for program-counter-relative branches, immediate fixnum arithmetic, and specialized instructions such as adjusting the height of the stack.
2. Signed-immediate operand -- The operand is an 8-bit two's complement quantity. It is used in a similar manner as the unsigned-immediate format.
3. Program counter relative operand -- This is similar to signed-immediate, with the offset relative to the program counter.

4. No-operand -- If there are any operands, they are not specified, since it is assumed they are on the top of the stack. Also used by many basic Zetalisp instructions.

5. Link operand -- This specifies a reference to a linkage area in a function header.

6. Link operand -- This specifies an indirect reference to a stack frame area associated with a function.

7. Local operand -- The operands are on the stack or within a function frame. This format is used for many basic Zetalisp instructions.

Many instructions address a source of data on which they operate. If they need more than one argument, the other arguments come from the stack. Examples include PUSH (push source content onto the stack), ADD (add source content and the content of the top of the stack), and CAR (take the car of the source content and push it onto the stack). These instructions exist in several formats.

There is no separate destination field in the system instructions. All instructions have a version which pushes the result onto the stack. Additional opcodes are used to specify other destinations.

The following categories of instructions are defined for the system:

- Data motion instructions -- The instruction move data without changing it. Examples include PUSH, POP, MOVEM, and RETURN.

- Housekeeping instructions -- These are used in message-passing, function called, and stack manipulation. Examples include POP-N, FIX-TOS, BIND, UNBIND, SAVE-BINDING-STACK-LEVEL, CATCH-OPEN, and CATCH-CLOSE.

- Function calling instructions -- These use a non-inverted calling sequence; the arguments are already on the stack. Examples include CALL, FUNCALL, FUNCALL-VAR, LEXPR-FUNCALL, and SEND.

- Function entry instructions -- These are used within functions that take more than four arguments or have a rest argument, and hence do not have their arguments set up by microcode. Examples include TAKE-N-ARGS, TAKE-N-ARGS-REST, TAKE-N-OPTIONAL-ARGS, TAKE-N-OPTIONAL-ARGS-REST.

- Function return instructions -- These return value from a function. The main opcode 9 is RETURN, with some variations.

- Multiple value receiving instructions -- These take some number of values off the stack. Example: TAKE-VALUE.

- Quick function call and return instructions -- These are fast function calls. Example: POPJ.

- Branch instructions -- Branches change the flow of program control. Branches may be relative to the program counter or to the stack.

- Predicates -- These include standard tests such as EQ, EQL, NOT, PLUSP, MINUSP, LESSP, GREATERP, ATOM, FIXP, FLOATP, NUMBERP, and SYMBOLP.

- Arithmetic instructions -- These perform the standard arithmetic, logical, and bit-magnipulation operations. Examples include ADD, SUBTRACT, MULTIPLY, TRUNCE2 (this does both division and remainder), LOGAND, LOGIOR, LOGXOR, LDB, DPB, LSH, ROT, and ASH.

- List instructions -- Many Zetalisp list-manipulation instructions are microcode directly into the system. Esamples are CAR, CDR, RPLACA, and RPLACD.

- Symbol instructions -- These instructions manipulate symbol and their property lists. Examples include SET, SYMEVAL, FSET, FSYMEVAL, FBOUNDP, BOUNDP, GET-PNAME, VALUE-CELL-LOCATION, FUNCTION-CELL-LOCATION, PROPERTY-CELL-LOCATION, PACKAGE-CELL-LOCATION.

- Array instructions -- This category defines and quickla manipulates arrays. Examples include AR-1, AS-1, SETUP-1D-ARRAY, FAST-AREF, ARRAY-LEADER, STORE-ARRAY-LEADER are used to access structure fields.

- Miscellaneous instructions -- These include pseudo data movement instructions, type-checking instructions, and error recover instructions not used in normal compiled code.

The system instruction execution engine works using a combination of hardware and microcode. The engine includes hardware for the following functions:

- Address computation
- Type-checking
- Rotation, masking, and merging of bit fields
- Arithmetic and logical functions
- Multiplication and division
- Result-type insertion

To give an example of the instruction execution engine, a 32-bit add instruction goes through the following sequence of events.

- Fetch the operands (usually from the stack); error correction logic ECC checks the integrity of the data; ECC function does not add to the execution time if the data is valid.
- Check the data type fields.

- Assume the operands are integers and perform the 32-bit add in parallel with the data type checking (If the operands were not integers, trap to the microcode to fetch the operands and perform a different type of add).
- Check for overflow (if present, trap to microcode).
- Tag the result with the proper data type.
- Push the result onto the stack.

There is no overhead associated with data type checking since it goes on in parallel with the instruction, within the same cycle.

The memory control also includes the error correction circuitry ECC. Rather than having the ECC circuitry distributed on all of the boards of the system, a single centralized ECC circuitry is used and located preferably on the memory control MC board. All data transfers into and out of the memory and on the Lbus pass through the single centralized ECC circuitry. The fransfers between I/O devices and the function FEP during a DMA also pass through the centralized ECC circuitry on the way to the main memory MM.

The FEP processor includes a processor as well as the miscellaneous support circuitry. During normal operation, the FEP processor controls the low and medium-speed input/output (I/O) devices, logs errors, and initiates recovery procedures if necessary. The use of the FEP processor drastically reduces the real-time response requirements imposed directly on the system processor. Operator devices such as a so called mouse and a keyboard can be connected to the system via the FEP processor.

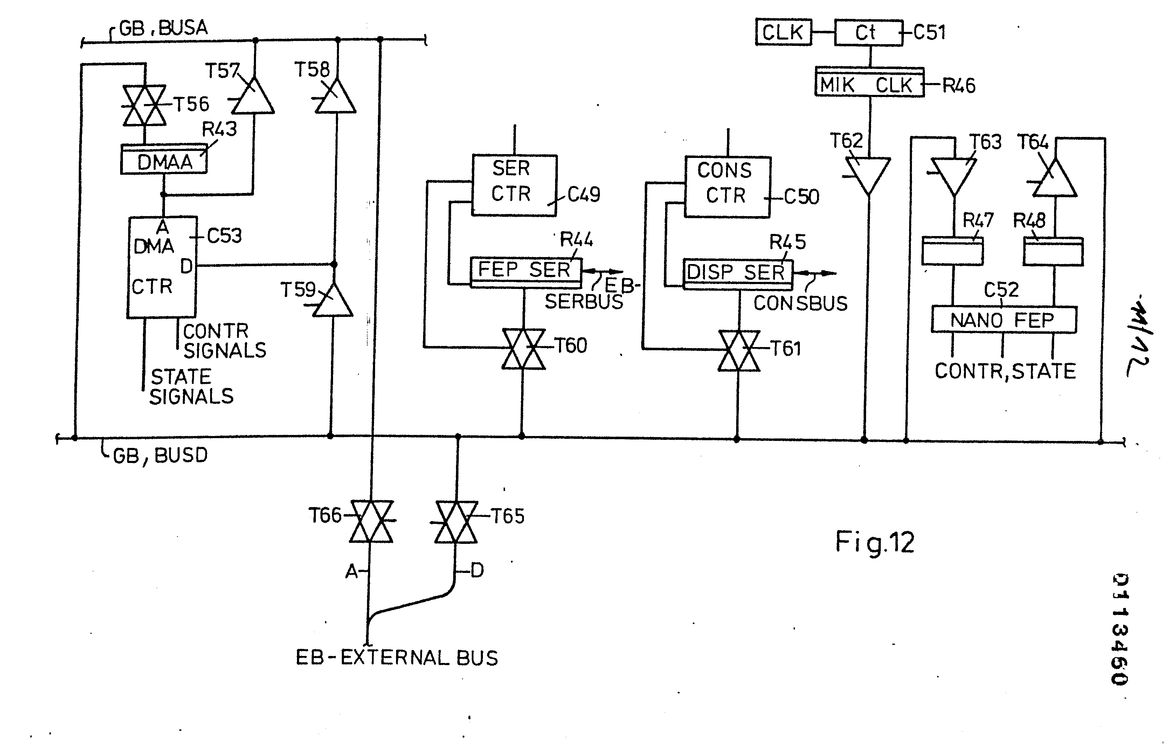

The front end processor also feeds a generic bus network which is interfacted through the FEP processor to the Lbus and which, by means of other interfaces are able to convert Lbus data and control signals to the particular signals of an external bus to which peripherals of that external bus type may be connected. An example of an external bus of this type is the standardized so called multibus. The Lbus data and control signals are converted to a generic bus format by the circuitry of Figs. 11, 12 independent of the particular external bus to be connected to and thereafter convert the generic bus format of data and control signals to that of the external bus.

The IEEE-796 standard MULTIBUS circuitry is thus used to attach commercially available MULTIBUS peripherals to the system via the FEP processor. It contains the MULTIBUS memory map within its fixed 64 Kword address space. Four programmable serial communication lines including a modem as well as MULTIBUS DMA Direct-memory-access data are routed through the FEP processor.

Two communication lines are high-speed and two are low-speed. Each one may be used either synchronously or asynchronously. One high-speed line is always dedicated to a system console, one low speed line is dedecated to a modem. The baud rate of the low-speed lines is programmable, up to 19.2 Kbaud. The available high-speed line is capable of speeds up to 1 Mbaud.

Real-time interrupts from the MULTIBUS are processed by the FEP processor. After receiving an interrupt, it traps to the appropriate interrupt handler. This handler writes into a system communication area of the FEP's main memory, and then sends an interrupt to the system CPU. The system CPU reads the message left for it in the system communication area and takes appropriate action.

Interrupt processing is sped up by the use of multiple microcontexts stored in the system processor. This makes interrupts servicing faster, since there is no need to save a full micro-context before branching to the interrupt handler.

The FEP processor also has the ability to achieve processor mediated DMA transfers. The circuitry for carrying out DMA includes the microsecond clock circuitry and microdevice decode circuitry and the DMA address circuitry, bus interface circuitry and control circuitry. DMA operations from the system to the FEP processor may be carried out at a rate of 2 MByte per second.

The following functions are provided for I/O device DMA interface to FEP buffer and to Microcode Tasks;
- FEP processor to device:

FEP processor fills buffer with data, arranged so that carry out of buffer address counter happens at right time for stop signal to device. FEP processor resets address counter to point to first word of data. FEP processor sets buffer mode to enable buffer data to drive the bus (SPY 7:0), sets device to tell it what operation to do, the fact that it is talking to the FEP processor, and to enable it to drive the bus control signal SPY DMA SYNC.

Device takes a word of data off of the bus and generates a pulse on SPY DMA SYNC line. The trailing edge of this pulse increments the address counter as well as clocking the bus into the device's shift register. A carry comes out ot the address counter during this pulse if this is the last word (or near the last, depending on device); this carry clears SPY DMA BUSY flip-flop which tells the device to stop.

When SPY DMA BUSY flip-flop clears the FEP processor is interrupted.

Device to FEP:

For disk devices, which need a stop signal, the FEP processor arranges the address counter so carry out will generate a stop signal. The network device generates its own stop signal based on end-of-packet incoming. The FEP processor resets the address counter to point one word before where the first word of data should be stored. The FEP processor sets the buffer mode to not drive the bus and to write into the buffer memory, it sets the device to tell it what operation it should do, the fact that it is talking to the FEP processor, to enable it to drive the bus from a register, and to enable it to drive the bus control signal SPY DMA SYNC and SPY DMA BUSY (if it is the network device).

When the device has a word of data to transmit, it generates a pulse on the SPY DMA SYNC line. Trailing edge of this pulse clocks the data into a register in the device, which is driving the SPY 7:0 lines, and increments the address counter, which reflects back the SPY DMA BUSY signal (if device is the disk). The buffer control logic waits for address and data setup time then it generates an appropriate write pulse to the memory.

When the SPY DMA BUSY signal clears, the FEP processor is interrupted. To summarize device to FEP processor interface lines:

SPY 7:0 lines - Bidirectional data bus. This is the same bus used for diagnostics.

SPY DMA ENB L signal, line - Asserted if the spy bus may be used for DMA. The FEP processor deasserts this when doing diagnostic reads and writes, to make sure that no DMA device drives the spy bus.

SPY DMA SYNC signal, line - Driven by selected device, trailing (rising) edge increments address counter and starts write timing chain.

SPY DMA BUSY L signal, line - Asserted until the transfer is over. This is driven by the device or the FEP processor depending on who decides the length of the transfer. (Probably the FEP processor drives it from a flip flop optionally set by the program, and cleared by the counter overflow). The FEP processor can enable itself to be interrupted when SPY DMA BUSY signal is non-asserted.

An I/O or generic bus is used to set up the device's control registers to perform the transfer and to drive or receive the above signals. Note that all of the tristate enables are set up before the transfer begins and remain constant during the entire transfer.

Device to microtask:

The devices are first set up using the I/O bus and the state of the microtask is initialized (both its program counter and its variables, typically address and word count). A task number is stored into a control register in the device.

When the device has a word of data, it transfers it to a buffer register and sets a WAKEUP signal. This is the same timing as a FEP DMA NEXT signal: the WAKEUP signal may be set on either edge since the processor will not service the request instantaneously. If the WAKEUP signal is already set, it sets the OVERRUN signal, which will be tested after the transfer is over.

The processor decides to run the task (see below). During the first cycle, the task microcode specifies the DISMISS function signal: the device receives this, gated by the current task, equals its assigned task number, and clears the WAKEUP signal at the end of the cycle. The DISMISS signal also causes the processor to choose a new task internally. The microcode also generates a physical address. The device also gets the micro-code function DMA-WRITE, gated by the current task, equals its device's task, and drives the buffer register onto the bus. The ECC circuit drives the ECC-syndrome part onto the bus and sends a write command to the memory.

During the second cycle, the processor counts down the word count, and does a conditional skip which affects at what program count the task wakes up next time, depending on whether the buffer has run out.

During the cycle two cycles before the first task cycle, the device drives its status onto 3 or 4 special bus lines, which the micro-task has enabled to dispatch on. This is used for such things as stopping on disk errors and stopping at the end of a network packet.

Microtask to device:
The device's control registers are first set up using the I/O bus, and the state of the microtask is initialized (both its program counter and its variables, typically address and word count). A task number is stored into a control register in the device. The WAKEUP signal is forced on so that the first word of data will be fetched.

When the device wants a word of data, it takes it from a buffer register and sets the WAKEUP signal so that the microtask will refill the buffer register. At the same time it sets the BUFFER EMPTY signal, and if it is already set, it sets the OVERRUN signal.

During the first cycle of the task, the microcode specifies the DISMISS function, which clears the WAKEUP signal. It also generates an address and specifies the DMA-READ function. In the second cycle the task decrements the word count. In the third cycle (task not running), the ECC-corrected data is on the bus;

at the end of this cycle it is clocked into the buffer register and the BUFFER EMPTY signal is cleared. The DMA-READ signal in logic "and" combined with the current task signal results the device task signal which is delayed through two flip-flops and then used to enable this clocking of the holding register.

Task selection hardware (in device and processor):

Each device has a task-number register and a WAKEUP flip-flop, which is set by a device signal and cleared by the DISMISS signal from the processor when the current task equals the device's task. This flip-flop is an R/S or a J/K type with either the set or the clear entrance edge-triggered depending on what the device needs. In the device to microtask case above, the WAKEUP flip-flop is being used for the overrun computation, and therefore the clearing is edge-triggered.

The WAKEUP signal enables on open-collector 3-8 decoder which decodes the assigned task number and drives the selected TASK REQUEST n line to the processor.

The processor sends the following signals to the device in addition to the normal I/O bus and clock:

| | |
|---|---|
| CURRENT TASK | - the task which the executing micro-instruction belongs to; |
| NEXT NEXT TASK | - clocks ahead of CURRENT TASK; |
| DISMISS | - current task says to clear wakeup; |
| TASK STARTUP DISPATCH | - DMA-READ, DMA-WRITE decodes of this; communication from device to micro-code, driven if NEXT NEXT TASK code matches assigned task code. |

The processor synchronizes the incoming TASK REQUEST lines into a register, clocked by the normal microcode clock. The register output signals are gated with a signal of a decoder which generates a FALSE signal for the current task if the DISMISS signal is asserted. The outputs of the gates go into a priority encoder. The output of the priority encoder is compared with current task. If they differ, and the microcode asserts the state TASK SWITCH ENABLE, and the processor did not switch tasks in the previous cycle, then it switches tasks in this cycle. During the second half of the cycle, NEXT NEXT TASK lines are selected from the priority encoder output rather than CURRENT TASK lines, and the state of that task is fetched.

When the DISMISS function is done, WAKEUP signal is not cleared until the end of the cycle, which means it is still set in the synchronizer register.

The minimum delay from setting the WAKEUP function to starting execution of the first microinstruction of the task is two cycles, one to fetch the task state and one to fetch the microinstruction. This can be increased by up to one cycle due to synchronization, by one cycle due to just having switched tasks, and by more if there are higher-priority task requests or the current task is disabling tasking (e.g. tasking is disabled for one cycle during a memory access). The maximum delay for the highest priority task is then 5 cycles e.g. 1 microsecond, assuming tasking is not disabled for more than one cycle at a time.

When the microcode task is performing a more complicated service than simple DMA, the WAKEUP flip-flop in the device must remain set until the last microinstruction to keep the task alive.

The FEP processor boots the machine from a cold start by reading a small bootstrap program from the disk via a loader , loading it into the microcode memory, and executing it. Before loading the bootstrap program, the FEP processor performs diagnostic on the data paths and internal memories of the  processor.

                               /by
Error handling works the FEP processor reporting detected error signals from the processor. If the errors come from hardware failures detected by consistency checks e.g., parity errors in the internal memories, then the processor must be stopped. At this point the FEP processor directly tests the hardware and either continues the processor or notifies the user. If the error signals are generated by software (microcode or Zetalisp) then the FEP processor records the error which are typically, disk or memory errors.

Periodically, the system requests information from the FEP processor and records it on the disk, to be used by maintenance personnel. Since the FEP processor always has the most recent error information, it is possible to retrieve it when the rest of the machine crashes. This is especially useful when a recent hardware malfunction causes a crash. Since the error information is preserved, it can be recovered when the processor is revived.

When the system is not running, the FEP processor provides diagnostic and microcode debugging tools. Simple diagnostics are stored e. g. in an EPROM (electrically-programmable-read-only-memory) within the FEP processor, along with code to run the network and the disk, using a high-speed buffer memory. The FEP processor uses the Spy bus to test the internals of the processor with a special circuitry.

For debugging hardware problems, it is possible to dial directly into the FEP processor from a remote console, or from another console on the data communication line. If more sophisticated diagnostics are needed, these can be loaded from the disk or over the communication network.

The FEP processor also includes the Lbus control circuitry which act in conjunction with the memory disclosed hereinbefore for controlling the Lbus. Also included is the page tag circuitry, as discussed earlier.

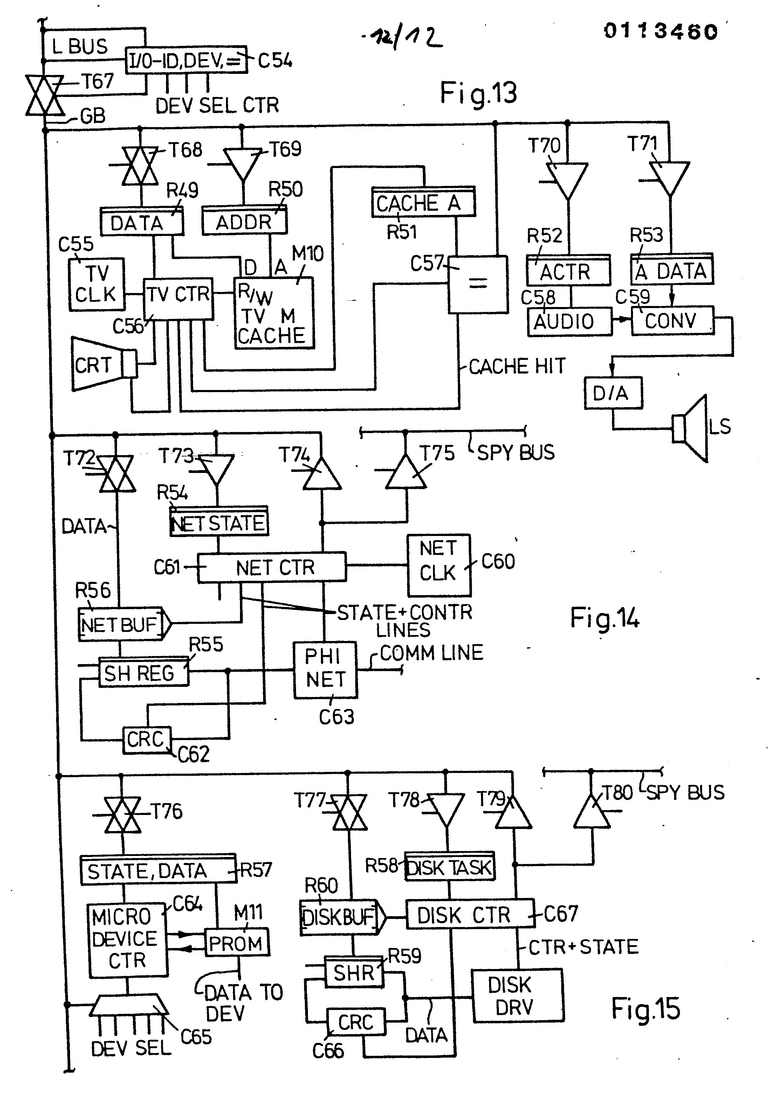

Figs. 13 - 15 illustrate the I/O circuitry for the display control, the communication network control, the Lbus, a disk controller and an audio output.

The I/O circuitry provides a flexible programmable high resolution color display circuitry. By use of the display memory circuitry, the system can effect a color display and control same by accessing one pixel per 32-bit word, addressing bits of one color of four adjacent pixels which are packed into one 32-bit word, accessing one plane of 32 adjacent pixels and filling 32 adjacent pixels with the value of the color fill register in one memory right cycle. Moreover the color memory is mapped directly into the system address space.

It is provided the support for a full 10 Mbit/s communication protocol. The processor and network controller are interconnected via the Lbus, and the network controller also receives a microtask assist from the processor.

It is provided for any storage module drive to be attached to the Lbus. The disk circuitry permits the controller logic, memory accesses and disk header comparisons to be performed in processor microcode, as a separate microtask. The microcode assist allows page chainings so that more than one page can be transferred in a single request.

Further it is provided an digital audio signal transmission interface between the Lbus and the system processor.

Functions are divided into three categories according to their real-time constraints:

Unit selection, seeking, and miscellaneous things like recalibration and error-handling are done by Lisp code. There are I/O device addresses (pseudo-memory) which allow sending commands to the disk drive and reading back its status (and its protocol, e.g. SMD, Priam). When formatting the disk, the index and sector pulses are directly read from the disk through this path and the timing relative to them is controlled by Lisp code and/or special formatting microcode.

Head selection is done in the same way except that it is done by microcode rather than Lisp code,because of the delay in scheduling a real-time process to run some Lisp code,so that an I/O operation may be continued from one track to the next in a cylinder without missing a revolution.

Read/write operations are done by disk control hardware in cooperation with microcode. There is a so called state machine which generates the "control tag" signals to the drive (i.e. read gate and write gate), controls the requests to the microcode task to transfer data words into or out of main memory, and controls the ECC hardware.

When the FEP processor is using the disk, the first two functions above are performed by so called LIL code in the FEP processor; the third function is performed by th disk state machine in cooperation with the FEP processor's high-speed I/O buffer.

The disk state processing circuitry can select its clock from one of two unsynchronized clocks, both ot which come from the disk. One is the servo clock and the other is the read clock, derived from the recorded data. The servo clock is always valid while there is a selected drive, the drive is spinning, and it is ready. Delays are always generated from the servo clock, not from the machine clock or one-shots.

The state machine is started by an order from the microcode, Lisp code, or the FEP processor and usually runs until told again to stop. When a selected memory drive SMD function is being used, most of the lines on the disk bus, including the control tag, come from a register which must be set up beforehand, but the Read Gate and Write Gate lines are delivered via or-gates by the states machine.

The state machine stops and sets an error flag if any of the following conditions occurs:

> No disk selected via SMD lines
> Multiple disks selected via SMD lines
> Disk not ready (Priam)
> Overrun (slow response from microcode)
> An unexpected index or sector pulse
> Writing the command register while the state machine is running

These error checks prevent clobbering an entire track if the microcode does not work correct for some reason and it never sends a stop signal.

Other errors from the disk, such as Off Cylinder, are not checked for. Most drives will cause a fault if any error occurs while writing. The disk error status (including fault) is checked by microcode and by macrocode after the sector transfer is completed.

The state machine can not signalize its function if the clocks from the disk turn off for some reason. Therefore a macrocode function provides a timeout.

The following orders to the state machine exist:

Read:             The state machine delays, turns on the read gate, delays some more, changes from the internal clock to the disk bit clock, waits for the asynchonous signal pattern, then reads data words and handles them by microcode until told to stop. The stop signal is issued simultaneous with the acceptance of the third-to-last data word by the microcode task. After reading the last data word, the ECC flag is read, and the microcode task is awakened one last time as the state machine goes idle. The ECC flag is read over the bus; the flag is 1 if no error occured.

Read Header:      The state machine waits for a sector pulse, delays, turns on the read gate, delays some more, changes from the internal clock to the disk clock, waits for the asynchronous signal pattern, reads one data word (a sector header), turns off the read gate, and enters the Read program. The header word is given to the microcode as data (32 bits of header and 4 bits of garbage); under the microcode control header-comparison is made to ensure that the proper section is being accessed. There is no ECC syndrome on the header, instead there are some redundant bits which the microcode checks in parallel with the real bits. In other words, the header consists of 6 bits of sector number, 6 bits of disc head number, 12 bits of cylinder number, and 4 bits of some hash function of the other bits, fitting into the 28-bit header stored in a disc channel word DCW list.

"Memory-mapped" I/O is used for all functions except those relating to the DMA task. This allows the FEP processor to read from the disk simply by doing Lbus operations, with no need to execute microinstructions (the CPU meanwhile is stopped or at least told not to be touching the disk itself). No provision is made for the ECC processor to use the disk when the Lbus is non-functional.

Command Register:      This register directly controls the bus, tag and unit-select lines to the disk(s), provides a DMA task assigment, and selects a state-machine program to be executed. If the state machine is running when the command register is written, it is stopped with an error signal. Otherwise it may optionally be started (if bit 24 is set). Writing the command register resets various error conditions. All bits in the command register may be read back. All bits in the command register except the low 8 are cleared by the Lbus Reset signal. The command register bits are related to the following functions:

| | |
|---|---|
| 10:0 | Disk bus |
| 11 | Obus in |
| 15:12 | SMD: tag 3:0, select memory drive |

| | |
|---|---|
| 19:16 | Unit number |
| 23:20 | Command opcode (selects state machine program) |
| 24 | Start. Starts state machine if 1. Reads back as -DISK IDLE (1 if state machine running) |
| 28:25 | Task. 8-15 selects that task, otherwise no task |
| 29 | FEP processor using disk. Enables the SPY bus performing DMA |
| 30 | 32-bit mode (forces fixnum data type in high bits) |
| 31 | (spare) |

A task wakeup occurs if the state machine orders one, and whenever the state machine is not running. No task should be assigned by the command register when the state machine is not being used. A wakeup will always occur immediately when a task assignment is given.

A Diagnostic Register and related circuitry is provided which allows a program to disable the disc interface and simulate a disk, testing most of the logic with the machine fully assembled. This diagnostic register is cleard when the machine is powered on. Its bits are related to the following functions:

| | |
|---|---|
| 0 | Read clock |
| 1 | Servo clock |
| 2 | Read data |
| 3 | Index |
| 4 | Sector |
| 7:5 | (spare) |

An Interface Enable Register is provided which is cleared when the machine is powered on. By setting it, the interface is disabled. It is set to 10 for normal operation. The bits are:

| | |
|---|---|
| 0 | Interface ID enable (interface identification to disk bus) |
| 1 | Interface disk enable (disconnect disk part) |
| 2 | Interface communication network enabel (disconnect network part) |
| 3 | Interface power OK (enable disk to spin up) |

Further a Status Register is provided, which reads the status of the selected drive, of the disk interface, and some internal diagnostic signals.

The Overrun and Error functions are cleared by writing the command register (however writing the command register while the state machine is running will set Error and stop the state machine).

Further there is a Rotational Position Sensing register provided. This is a 16-bit register with 4 bits for each drive, containing the current sector number.

Error Correction:

Bit 15 of the status register is set to 0 after a read operation, during which an ECC error was detected. The state machine performs error correction operation and computs the error syndrome. The micro-code task wakes up every 32 bits, to count the bits. After the state machine stops, the error correction register being provided for that purpose contains:

| | |
|---|---|
| 10:0 | Error pattern |
| 15:11 | Bit number within the word |

DMA Transfers are controlled on the Lbus as follows:

A microdevice write operation is done during the address cycle. At the same time to the sequencer is signalized to dismiss the task and to the memory control is signalized to start the appropriate (read or write) DMA cycle. Bits in the Lbus device address are:

| | |
|---|---|
| 9:5 | card slot number |
| 4:3 | subdevice (o - disk) |
| 2:0 | operation code |

Operations:

| | |
|---|---|
| 0 | write disk buffer directly (rev 2 and later) |
| 1 | dma cycle (start dma cycle without dismission) |
| 2 | dismiss, task acknowledge (just clear wakeup) |
| 3 | dismiss & dma cycle |
| 4 | dismiss (only) |
| 5 | kill disk task |
| 6 | dismiss, task acknowledge, set end flag |
| 7 | dma cycle & set end flag & dismiss |

Operation 3 is what is normally used. Operation 1 could allow transferring multiple words per task wakeup if there was more than 1 word of buffering: it is also probably needed by the microcode in order to start a DMA transfer for the disk while continuing to run the task.

Operation 2 is used for non-data-transfer task wakeups, such as the wakeup on sector pulse and the wakeup used to count words when doing ECC correction. It simply dismisses the task (clears wakeup), and also changes timing with respect to the Overrun error.

Operation 5 clear the disk task assignment, preventing further wakeups, clears control tag so that the next disk command can be given cleanly and also "accidentally" clears fep-using-disk and disk-36-bit-mode.

When reading from disk into memory, after the dma cycle with the end flag there will be two additional data words; the state machine will then read and check the ECC code and then stop.

When writing from memory to disk, the data word supplied with the end flag is the second-to-last data word in the sector; the state machine will accept one more data word, then write the ECC code after it, write a guard byte, and then stop. The same timing applies for read-compare.

For microdevice read, the bits in the Lbus device address are:

| | |
|---|---|
| 9:5 | card slot number |
| 4:3 | subdevice (0-disk) |
| 2:0 | operation (0 for disk - read data buffer). |

The combination of the synchronous pipeline memory, microtasking, microprogram controlled DMA and centrallized ECC circuitry is believed to be particularly advantageous in that it eliminates a DMA circuitry for each mecrodevice that wants to issue a request to the memory and it also eliminates the use of ECC circuitry on each board of the system.

The synchronous pipeline memory, microtasking and micro processor control DMA features combine to enable micro sequencing between an external peripheral and the memory of the system via the FEP processor with the error correction taking place within the active cycle of the bus timing whereby the microdevice which is requesting data from the memory is not impacted. This combination of features allows an external I/O device to issue a task request and for the microtasking feature of the system to effect the data transfer in a block mode.

It will be appreciated that the instant specification and claims are set forth by way of illustration and not limitation, and that various modifications and changes may be made without departing from the spirit and scope of the present invention.

As a conclusion it can be seen that the data processor according to the invention comprises hardware and software means as error corretion ECC and compiler means for failure diagnosis and failure elimination prior to operation on data and execution of a program, and there are hardware means for detection of dynamic or so called soft failures during run-time in hardware as parity error detection P1 - P10 circuitry, double error detection C21 circuitry and software error detection C10,M1,M2 circuitry and further there are hardware and software correcting means to recover automatically from such failures, such means including call of microprogram recover routines or tasks and/or macroprogram recover routins or tasks under use of state register informations, stack and map informations including historical information contained in the old program counter OPC memory table and employing the spy bus SPB BUS network either by the central processor CPU or by the front end processor FEP. This way such means are used as well for hardware as for software failure curing, and the data processor can run with highest speed fail safe especially LISP programms saving time consuming preliminary checks on compatibility of data typs and instructions applied.

Microcode Control of Sequencer

U SBQ    1:0

    0 no function

    1 pushj (i.e. increment CSP)

    2 dismiss current task

    3 popj (i.e. decrement CSP)

    This field is effectively forced to 0 when the sequencer
is stopped, and forced to 1 when a trap or slow jump
is taken.

U CPC SEL    1:0

    Selects address from which next microinstruction will
be taken, except for bit 12 which may be selected from
-COND (skip).

    0 NAF (next-address-field of current instruction)

    1 CTOS (control-stack or IFU, normally used together
        with POPJ)

    2 NPC (take-dispatch, restore from trap)

    3 (space)

    A trap or slow jump supplies an address and ignores
this field.

U NPC SEL

    Selects source for loading NPC register.

    Normally:

    0 NAF modified by dispatch in bits 11:8

    1 NEXT CPC+1 (only the low 8 bits increment)

    With SPEC NPC SEL 1 and MAGIC-3 (or 0 on rev-3 board)

    0 CTOS (restore from trap)

    1 CPC (forced when taking trap or slow jump)

Table 1.1

U NAF      13: 0

Next-address field

These fields also used by data-path:

U COND FUNC  1: 0

    0 nothing

    1 SKIP (CMEM A 12 gets -COND)

    2 (TRAP IF COND)

    3 (trap if -COND)


U SPEC    4: 0

    30 ARITHMETIC TRAP WITH DISPATCH

       (If trap to address in NAF, bits 11-8 get replaced

       by high type bits of Abus Bbus)

    31 HALT

       Stops the machine after executing this microinstruc-

       tion.

    32 NPC MAGIC

       Modifies U NPC SEL above, also allows connection

       between the data path and the sequencer (see

       MICROINSTRUCTION.BITS)

    33 AWAKEN TASK

       Set wakeup for software task selected by U MAGIC 1:0

    34 WRITE TASK

       Write task memory from address and data on Obus

    35 TASK DISABLE

       Forces the current task to be the same in the

       cycle after next as in the next cycle. Because of

       this pipelining, you need to do this function twice

       in a row before it really takes effect.

Table 1.2

D = DISMISS (task voluntarily going away, after 1 (or 2) more microinstructions)

W = MC WAIT (NOP this microinstruction and try it again, on demand of memory control)

T = Trap (Double-length cycle, NOP this microinstruction, take different successor)

S = TASK SWITCH (next microinstruction from different task)

State = UIR, NPC, CPC, CSP

Capture = task-state capture registers

Error = hardware error registers

| DWTS | State | CTOS | CUR TASK | NEXT TASK | Capture | DPC | NOP | Error |
|------|-------|------|----------|-----------|---------|-----|-----|-------|
| ---- | clk | clk | clk | clk >= | clk | clk | no | clk |
| D--- | clk | clk | clk | clk < | clk | clk | no | clk |
| -W-- | hold | clk | hold | clk >= | no | clk | yes | clk |
| DW-- | hold | clk | hold | clk >= | no | clk | yes | clk |
| --T- | clk | clk | clk | clk >= | clk | clk | yes | clk |
| D-T- | clk | clk | clk | hold | clk | clk | yes | clk |
| -WT- | hold | clk | hold | clk >= | no | clk | yes | clk |
| DWT- | hold | clk | hold | hold | no | clk | yes | clk |
| ---S | clk | clk | clk | hold | clk | clk | no | clk |
| D--S | clk | clk | clk | clk = | clk | clk | no | clk |
| -W-S | clk | clk | clk | hold | no | clk | yes | clk |
| DW-S | clk | clk | clk | hold | no | clk | yes | clk |
| --TS | clk | clk | clk | hold | clk | clk | yes | clk |
| D-TS | clk | clk | clk | hold | clk | clk | yes | clk |
| -WTS | clk | clk | clk | hold | no | clk | yes | clk |
| DWTS | clk | clk | clk | hold | no | clk | yes | clk |

Table 2

SPY WRITE CMEM 0,1.....13 WD

Write an 8-bit slice of the CMEM WD register. This register is a source of write data for control-memory CMEM and also a source of microinstructions into UIR when CMEM is disabled. UIR is microinstruction register.

SPY READ CMEM 0,1.....13

Read an 8-bit slice of UIR (which typically contains data from CMEM).

SPY WRITE CTL 1,2

Write sequencer control & clock register described above. This has two spy functions since it is a 16-bit register; the CTL1 is the least-significant byte.

SPY READ NEXT CPC (2 addresses)

Read NEXT CPC lines, which are the control-memory address in the absence of tasking. Allows reading NPC, CTOS, trap address, U NAP. To read the CPC it is first single-steped into the NPC. To control the NEXT CPC selection it is a microinstruction into the UIR forced.

SPY READ SQ STATUS (2 addresses)

Read error halt conditions as a 16-bit word:

| | |
|---|---|
| 7 AU STOP | 15 -ERRHALT |
| 6 MC STOP | 14 TSK-STOP |
| 5 BMEM PAR ERR | 13 CTOS CAME FROM IFU |
| 4 AMEM PAR ERR | 12 CMEM (UIR) PAR ERR |
| 3 PAGE TAG PAR ERR | 11 TASK MEM PAR ERR |
| 2 TYPE MAP PARR ERR | 10 CTOS (LEFT) PAR ERR |
| 1 GC MAP PAR ERR | 9 CTOS (RIGHT) PAR ERR |
| 0 ·(space) | 8 MICROCODE HALT |

Table 3.1

SPY READ TASK

        3:0 are CUR TASK


SPY READ SQ STATUS 2

        More status:

                1-0 are the CTOS parity bits

SPY READ SQ BOARD IO (ID = identification)

        Read the board-ID from (gives serial number, ECC Level, etc.)

        Address comes from the U AMRA 4:0 field of UIR


SPY READ DP BOARD ID

        Read the board-ID from on the datapath (the spy address is decoded by the sequencer).


SPY READ OPC 1,2

        Reads PC history memory (PC = program counter). This is a 16 entry RAM where each entry contains a PC in bits 13:0, bit 14 = NOP for that microinstruction, and bit 15 = 1 if the next microinstruction came from a different task. The OPC memory reads out backwards (i.e. with the sequencer stopped, the first read gets you the last instruction executed, the next read gets you the instruction before that, etc.) After 16 reads it is back in its original state.


Table 3.2

LBUS FIRST HALF +/- - timing signal from memory control. Used during Data cycles to enable memory data onto the bus. The memory card drives data onto the bus during the first half of the cacle, the memory control reads the bus data and does error correction. During the second half cycle, the corrected data is driven on the bus from the memory control.

LBUS REQUEST L - Request for Memory or Devices addressed by Bus Address.
LBUS REQUEST L and LBUS WRITE L, along with the address, are asserted towards the end of the first cycle of a transaction. The data are transferred during the second or third cycle. The request, write, and address lines are not valid during those cycles.

LBUS WRITE L - from the processor or FEP. The write data will be driven onto the bus during the next cycle. Otherwise, the requested cycle is a read, and the memory will drive the bus during the 2nd succeeding cycle.

LBUS WITH ECC - from Memories that don't have ECC bits. Driven during Data cycle.

LBUS WAIT L - from Devices. Asserted for as many cycles as necessary to hold memory control in Active cycle state.

LBUS ID REQUEST L - Request that the selected board supply information about itself. The board selection is by matching LBUS ADDR 23:19 against the slot number (see below). LBUS 7:0 are driven with one of 32 bytes of data selected by LBUS ADDR 6:2.

Table 4.1

RESET SIGNALS

LBUS REST L - general reset line. This is brought low when power is turned on, and whenever the FEP needs it.

LBUS POWER REST L - brought low when power is not valid.

MICRODEVICE SIGNALS

LBUS DEV 9:0 - a device address for microdevice operations. Bits 9:5 selected a board, by matching against the slot number. The special slot numbers 36 and 37 used to select the FEP and MC boards, respectively. Bits 4:0 select a register or operation within the board.

LBUS DEV READ L - commands the device to put data onto the Lbus data lines.

LBUS DEV WRITE L - commands the device to take data from the Lbus data lines at the LBUS CLOCK.

LBUS DEV COND L - the selected device can ground this line to feed a skip condition to the microcode.

Table 4.2

SPY SIGNALS

SPY 7:0 - an 8-bit, bidirectional, rather slow bus used for diagnostic purposes. Allows the FEP processor to read and write various cpu state while the machine is running.

SPY ADDR 5:0 - addresses the diagnostic register to be read or written

SPY READ L - gates data from the selected register onto the spy bus.

SPY WRITE L - clocks data from the spy bus into the selected register, on the trailing edge.

SPY DMA SIGNALS

When the spy bus isn't being used for diagnostics, the FEP processor uses it as a special side-door path to certain DMA devices. Normally the FEP processor uses it to receive a copy of all incoming network packets; it can also be set up to transmit to the network and to read from the disk.

SPY 7:0 - 8 bits of data to or from a DMA device. These lines are continuously driven during DMA operations.

SPY DMA ENB L - asserted if DMA operations are permitted to take place; deasserted if the spy bus is being used for diagnostic purposes.

SPY DMA SYNC - a clock, asserted by the device. On the rising edge of this a byte is transferred and the address is incremented. The device must take the data (for write) or supply the new date (for read) on or before the leading edge of this. This is on the same wire as SPY ADDR 0.

Table 5.1

SPY DMA BUSY L - asserted if the DMA operation has not yet completed. This can be asserted by the device or the FEP processor or both, depending on who determines the length of the transfer. For example, for network input this comes from the device, while for network output and disk input it comes from the FEP processor.

This is on the same wire as SPY ADDR 1.

Table 5.2

Micro Instruction Signals:

UIR 0 - 11 ----- U AMRA 0 - 11

UIR 12 - 13 ---- U AMRA SEL 0 - 1

UIR 14 ---- U XYBUS SEL

UIR 15 ---- U STKP COUNT

UIR 16 - 25 ---- U AMWA 0 - 9      LBUS DEV

UIR 26 - 27 ---- U AMWA 10 - 11

UIR 28 - 29 ---- U AMWA SEL 0 - 1

UIR 30 ---- U SEQ 0      D* PUSHJ L, NC

UIR 31 ---- U SEQ 1      D* POPJ L, DISMISS L

UIR 32 - 39 ---- U BMRA 0 - 7

UIR 40 - 43 ---- U BMWA 0 - 3

UIR 44 ---- U BMEM FROM XBUS

UIR 45 - 47 ---- U MEM 0 - 2

UIR 48 - 50 ---- U SPEC 0 - 2      D* SPEC ARITH TRAP DISPATCH L

                                               SPEC HALT L

                                               SPEC NPC MAGIC L

                                               SPEC AWAKEN TASK L

                                               SPEC WRITE TASK L

                                               SPEC TASK DISABLE L

UIR 51 - 52 ---- U SPEC 3 - 4

UIR 53 - 56 ---- U MAGIC 0 - 3

UIR 57 - 61 ---- U COND SEL 0 - 4

UIR 62 - 63 ---- U COND FUNC 0 - 1

UIR 64 - 67 ---- U ALU 0 - 3

UIR 68 - 69 ---- U BYTE F 0 - 1

UIR 70 - 72 ---- U OBUS 0 - 2

UIR 73 - 75 ---- U OBUS HTYPE 0 - 2

UIR 76 ---- U OBUS LTYPE SEL

UIR 77 - 78 ---- U CPC SEL 0 - 1

UIR 79 ---- U NPC SEL

D* = Decoded

Table 6.1

UIR 80 - 93 ---- U NAF 0 - 13
UIR 94 - 95 ---- U SPEED o - 1
UIR 96 - 101 --- U TYPE MAP SEL 0 - 5
UIR 102- 109 --- U AU OP 0 - 7
UIR 110      ---- U SPARE
UIR 111      ---- U PARITY

Table 6.2

Error functions, ERRHALT:

AU STOPPED

MC STOPPED

BMEM PAR ERR = BMEM LOST

AMEM PAR ERR = AMEM LOST

PAGE TAG PAR ERR = PAGE TAG LOST

TYPE PAR ERR = TYPE MAP LOST

GC MAP PAR ERR = GC MAP LOST

TSKM LOST

CTOS LOST


SPY functions signalled:

SPY ADDR 0:

    TSKM LOST

    CTOS 2 LOST

    CTOS 1 LOST

    CTOS CAME FROM IFU

    TSK STOP


SPY ADDR 1:

    PAGE TAG LOST

    TYPE MAP LOST

    GC MAP LOST

    AU STOPPED

    MC STOPPED

    BMEM LOST

    AMEM LOST


Table 7

TRAP functions:

BBUS NOT FIXNUM
TYPE COND
U COND FUNC
OVERFLOW
GC TRANSPORT

OBUS-signals; Insertion TYPE and CDR:

ALU 0 - 27 = OBUS 0 - 27

ALU 28 - 31     -
U MAGIC 0 - 3 -
go on            - OBUS 28 - 31    depending on selection

U OBUS HTYPE 0 - 1  -
U OBUS CDR 0 - 1    -
BBUS 4 - 7          -
BBUS 32 - 35        -
ABUS 32 - 35        -
go on                - OBUS 32 - 35    depending on selection

Table 8

Claims

1. Method of data processing wherein data from of at least one set of contiguous main memory addresses is stored in a buffer memory (AMEM) which is accessible at a higher speed than the main memory (MM) and the data is operated on and the memory addresses are produced, the improvement comprising the steps of: identifying at least one set of those contiguous addresses in the main memory (MM) for which the data is stored in the buffer memory (AMEM); addressing the buffer memory (AMEM) instead of the main memory (MM) when the address is identified as being in said at least one set and addressing the main memory (MM) instead of the buffer memory (AMEM) when the address is identified as not being in said at least one set, and preferably the method is comprising producing a given memory address corresponding to a base pointer and a selected offset from the base pointer by arithmetically combining the base pointer and offset prior to the step of addressing, and preferably the method further preferably is comprising a step of limiting the offset from the base pointer to within a preselected range and insuring that the arithmetic combination of the base pointer and offset fall within the at least one set of memory addresses.

2. The method according to claim 1, further comprising executing each operation on data in a predetermined timing cycle and producing the base pointer and offset in one timing cycle and wherein the step of arithmetically combining the base pointer and offset is completed in said one timing cycle, and wherein preferably the step of arithmetically combining comprises providing an arithmetic logic unit (A1) dedicated solely thereto, and wherein preferably the step of addressing comprises converting the addresses to physical locations in main
memory (MM) and the identifying step therein.

3. The method according to claim 1 or 2, further comprising a step
of executing sequences of microcode instructions and compiling
a symbolic processing language program into sequences of macrocode instructions and limiting the offset from the base pointer
to within a preselected range and wherein the step of compiling
comprises insuring that the arithmetic combination of the base
pointer and offset fall within the at least one set of memory
addresses.

4. The method according to one of the claims 1 to 3, wherein data
objects each having an identifying type field are stored and
at least one data object from storage is operated on, the improvement comprising the steps of: separating the type field ·
from the remainder of each data object prior to the operation
thereon; checking the separated type field with respect to the
operation on the remainder of the associated data object; generating a new type field in accordance with the operation in
parallel with the operation on the data object; and combining
the new type field with the result of the operation, and pre-
ferably comprising interrupting the operation on the data object in response to the predetermind type field generated and
resuming operation upon the alteration thereof, and preferably
executing each operation on the at least one data object in a
predetermind timing cycle and separating, checking and combining
the new type field within the same timing cycle as that of the
operation.

5. The method according to one of the claims 1 to 4 wherin each storage location of the main memory (MM) is provided with a multi-bit actual address comprising a page number and an offset number, data is operated on and stored with an associated virtual address comprising a virtual page number and an offset number and the virtual address is converted to the actual address, the improvement wherein the step of converting comprises: performing a first hash function on a virtual page number to reduce the number of bits thereof to form a map address corresponding to a hashed virtual page number; storing the actual page number and the virtual page number corresponding thereto in the map address of at least one addressable map converter (MAPA) which corresponds to the hashed virtual page number; applying a map address to the converter (MAPA) to obtain a virtual page number; comparing the virtual page number with the virtual page number accessed by the map address whereby a favorable comparison (MAPA HIT) indicates that the stored actual page number is in the map converter (MAPA); performing a second hash function on the virtual page number in parallel with the performance of the first hash function and conversion; and addressing the main memory (MM) with the accessed actual page number and the original offset number when there is favorable comparison and addressing the main memory (MM) with the second hashed virtual page number when the comparison is unfavorable, and wherein preferably the step of converting further comprises providing at least two addressable map converters (MAPA, MAPB) each receptive of the map address corresponding to the first hashed virtual page number and writing the virtual page number and actual page number at the map address in the least recently used of the at least two map converters (MAPA; MAPB) when there is no favorable comparison from all of the converters (MAPA HIT, MAPB HIT), and preferably further comprising addressing a page hash table in main memory (MM) with said second

hashed virtual page number, executing at least one microcode instruction, each within one timing cycle and wherein the converting means further comprises means responsive to the producing a microcode controlled look-up of the address in a secondary table when there is a failure to locate the physical address in the page hash table, and wherein preferably the step of converting producing a macrocode controlled look-up of the address in a third table of main memory (MM) when there is a failure to locate the address in the secondary table and then in a fourth table in the secondary storage table if not in the third table and indicating an error if not in the secondary fourth table, and wherein preferably the step of converting further comprises entering the address in all tables where the address was not located.

6.  The method according to one of the claims 1 to 5, wherein sequences of macrocode instructions are executed, the improvement comprising: defining a predetermined set of exceptional data processing conditions; detecting the occurrence of said conditions during the execution of sequences of macrocode instructions; retaining a selected portion of the state of the data processing upon the detection of one of said conditions to permit the data processing to be restarted to complete the pending sequence of macrocode instructions upon the removal of the detected condition; initiating a predetermined sequence of macrocode instructions for the detected condition to remove the detected condition; and restoring the data processing to the pending sequence of macrocode instructions, and wherein preferably the step of initiating comprises manipulating the retained state to remove the detected condition, and wherein preferably the step of initiating includes regenerating the nonretained portion of the state, and further preferably comprising the steps of executing each macrocode instruction by at least one microcode instruction and controlling the defining of the set of conditions and the detecting of same by microcode instructions, and wherein preferably the step of retaining the state is controlled by microcode instructions, and wherein preferably the step of initiating the predetermined sequence of macrocode instructions is controlled by microcode instructions.

7. The method according to one of the claims 1 to 6, wherein operations on data are executed in a central processor (CPU) in predetermined timing cycles, the improvement comprising the steps of: executing microcode instructions task sequences with the execution of a microcode instruction in each timing cycle, interrupting a task sequence with another task sequence in response to a predetermined system condition and resuming the interrupted task sequence when the condition is removed; interconnecting the main memory (MM), central processor (CPU) and peripheral devices (PD) in parallel on a bus (Lbus); providing a single centralized error correction circuit (ECC) shared by the main memory (MM), the central processor (CPU) and peripheral devices (PD) controlling data transfers on the Lbus in synchronism with the system timing cycles to define a frist timing mode for communication between the main memory (MM) and the central processor (CPU) through the centralized error correction circuit (ECC) and a second timing mode for communication between the peripheral devices (PD) and the central processor (CPU) and thereafter the main memory (MM) through the centralized error correction circuit (ECC), and further preferably comprising storing data from said the peripheral devices (PD) into the main memory (MM) and removing data from the main memory (MM) for the peripheral devices (PD) at a predetermined location based upon the peripheral device (PD) under control, and further preferably comprising altering a state of the peripheral device (PD) from which data is received depending upon a data transfer state.

8. The method according to one of the claims 1 to 7, wherin the data and control signals are communicated between the cental processor (CPU) and the main memory (MM) by the Lbus, the improvement comprising the steps of: a bus, the generic bus (GB); converting the data and control signals between the Lbus formats and generic bus formats; transmitting the data and control signals between the Lbus and the generic bus (GB); converting the data and control signals between the generic bus format and a selected external bus format; transmitting the data and control signals between the generic bus (GB) to the peripheral devices (PD) connected to the selected external bus (EB) and wherein the first step of converting data and control signals is performed independently of the external bus (EB) selected.

9. The method according to one of the claims 1 to 8, wherein data objects are stored in main memory (MM) and are addressable by multibit addresses; the addresses are generated by the central processor (CPU) and operated on, the improvement comprising the steps of: dividing the main memory (MM) into predetermined regions; locating data objects in said regions; producing a table of action codes each corresponding to one region; applying a generated address to the table in parallel with the operation thereon to obtain the action code associated therewith; and determining in parallel with the operation on the address if an action is to be taken for each action code obtained, and preferably further comprising the steps of: executing each operation in a predetermined timing cycle and wherein the action code is obtained and the response thereto is determined within the same timing cycle as that of the operation on the address, and preferably further comprising the steps of interrupting the operation of the central processor (CPU) in response to a predetermined action code and resuming operation of the central processor (CPU) in response to the completion of the action taken, and further preferably comprising the steps of executing operations by at least one microcode instruction and wherein the step of determining the response is controlled by microcode instructions.

10. The method according to one of the claims 1 to 9, further comprising: examining the data object at a generated address to see if it was moved to a new address; if moved, changing the generated address to the new address and continuing operating on the data object at the new address; if not moved, moving data object to a new address in a new area of the main memory (MM), updating the data object at the generated address to indicate it was moved, changing the generated address to the new address and continuing operating on the data object at the new address.

11. The method according to one of the claims 1 to 9, wherein the main memory (MM) is divided into pages, the improvement comprising the steps of: storing at least one bit associated with each page of memory, locating a given address in a region memory (M9) and entering a code in the at least one bit for given page in parallel with the locating of the address to indicate whether an address therein is in a selected set of regions in memory, and wherein preferably the step of entering comprises producing a table of action codes each corresponding to one region of main memory (MM), applying an address to the table in parallel with the locating thereof and determining if the address is in one of the selected set of regions in response to its associated action code.

12. The method according to claim 10 or 11, further comprising executing a sequence of macrocode and microcode instruction sequences to effect garbage collection in the central processor (CPU) by determining areas in the main memory (MM) to be garbage collected and wherein the action code table produces one action code initiates the garbage collection sequences, and further preferably comprising garbage collecting the set of memory regions by sensing the at least one bit for each memory page and skipping that page when the code is not entered therefor.

13. The method according to one of the claims 1 to 12, wherein a Lbus request signal (REQUEST) is produced by the central processor (CPU) to effect a transaction with a peripheral device (PD) on the Lbus, the improvement comprising the steps of: effecting all transactions on the Lbus in synchronism with the central processing in a request cycle comprising one clock period wherein the central processing produce the request signal (REQUEST) along with address data, an active cycle comprising at least one next clock period wherein the peripheral device (PD) is accessed and a data cycle comprising the next clock period wherein data is placed on the Lbus by the peripheral device (PD), and further preferably comprising performing a block bus transaction by providing a series of request signals (REQUEST) from the central processor (CPU) in consecutive clock periods and for overlapping the cycles of consecutive transactions on the Lbus.

14. The method according to one of the claims 16 to 28, comprising interfacing with the central processing system (CPU) having the Lbus synchronous with a main clock (CLK), comprising the steps of: responding to a transaction request signal (REQUEST) by receiving address data in a request cycle of one system clock period; accessing addressed data in an active cycle comprising at least one main clock (CLK) period and producing a wait signal (WAIT) when more than one system clock period is necessary; and applying data to the Lbus in a data cycle comprising the next system clock period, and further preferably comprising receiving request signals (REQUEST) in consecutive main clock (CLK) period and overlapping the request, active and data cycles for consecutive transactions.

15. Data processor programmable in a symbolic processing language and having a main memory (MM), a memory controler (MC) , and a buffer memory (AMEM) for storing the data of at least one set of contiguous main memory addresses and being accessible at a higher speed than the main memory (MM) and central processing means (CPU) for operating on data and producing memory addresses, the improvement comprising: the memory controller (MC) containing means for effecting storage (MAPA, MAPB) of at least one set of contiguous main memory addresses corresponding to the data in the buffer memory, means (C37, C38) for identifying those contiguous addresses of main memory for which data is stored in the buffer memory and means (D24, T32,D8) receptive of the memory addresses for addressing the buffer memory (AMEM) instead of the main memory (MM) when the identifying means (C37,C38) identifies the address as being in said at least one set and means for addressing (D24, T32) the main memory (MM) instead of the buffer memory (AMEM) when the identifying means (C37,C38) identifies the address as not being in said at least one set.

16. The data processor according to claim 15, wherein the central processing means (CPU) comprises means for producing (D9, D10,A1) a given memory address (AMEM A) corresponding to a base pointer (BASE) and a selected offset (OFFSET) from the base pointer and means for arithmetically combining (A1) the base pointer and offset prior to applying same to the addressing means (D8), and wherein preferably it includes means for executing each operation on data in a predetermined timing cycle and for producing the base pointer (BASE) and offset (OFFSET) in one timing cycle and wherein the means for arithmetically combining (A1) the base pointer and offset combines same in said one timing cycle, and wherein preferably the means for arithmetically combining (A1) comprises an arithmetic logic unit dedicated solely thereto, and wherein the central processing (CPU) means preferably comprises means for limiting the offset from the base pointer to within a preselected range and means for insuring that the arithmetic combination of the base pointer and offset fall within the at least one set of memory addresses.

17. The data processor according to claim 15 or 16, wherein the addressing means (C35,D24,T32;C36,MAPA,C37) comprises means for converting (C35) the addresses from the central processing (CPU) means to physical locations in the main memory (MM) and wherein the addressing means includes the identifying means (C36,MAPA,C37).

18. The data processor according to one of the previous claims comprising a main memory (MM) for storing data objects each having an identifying type field (TYPE TAG) and central processing means (CPU) for operating on at least one data object from the main memory (MM), wherein the improvement comprises: means for separating (C10) the type field from the remainder of each data object prior to the operation thereon by the central processor (CPU) and for checking the separated type field with respect to the operation on the remainder of the associated data object and for generating a new type field in accordance with the operation in parallel with the operation on the data object; and means for combining (C14) the new type field with the results of the operation, and preferably comprising means for interrupting (C3) the operation of the central processor (CPU) in response to a predetermined type field (TYPE TRAP) generated and for resuming operation upon the alteration thereof, and wherein preferably the central processor (CPU) includes means for executing each operation on the at least one data object in a predetermined timing cycle and wherein the separating and checking (C10) means and combining means (C14) separate, check and combine the new type field within the same timing cycle as that of the operation.

19. The data processor according to one of the previous claims comprising a main memory (MM) wherein each location has a multi-bit actual address comprising a page number and an offset number, central processing (CPU) means for operating on data and for storing data in the main memory (MM) with an associated virtual address comprising a virtual page number and an offset number and means for converting (C36) the virtual address to the actual address, the improvement wherein the converting (C36) means comprises: means for performing a first hash function (C36) on the virtual page number (VMA 27:8) to reduce the number of bits thereof to form a map address corresponding to the hashed virtual page number; at least one addressable map converter (MAPA,MAPB) for storing the actual page number and the virtual page number corresponding thereto in the map address corresponding to the hashed virtual page number; means for comparing (C37) the virtual page number (VMA) with the virtual page number accessed by the map address whereby a favorable comparison signal (MAPA HIT) indicates that the stored actual page number is in the map converter; means for performing a second hash function (MAPB,C38) on the virtual page number in parallel with the performance of the first hash function and conversion; and means for applying (D24,D23,T32) the accessed actual page number and the original offset number (PHTA 7-0) to the main memory (MM) when there is favorable comparison and for applying the second hashed virtual-page number to the main memory (MM) when the comparison is unfavorable, and wherein preferably the converting means further comprises at least two addressable map converters (MAPA,MAPB) each receptive of the map address corresponding to the first hashed virtual page number (VMA 27:8) and means responsive (T31,T24,T28,C371) to an unfavorable comparison from all of the converters for writing the virtual page number and actual page number at the map address in the least recently used of the at least two map converters (MAPA,MAPB).

20. The data processor according to claim 19, wherein the main memory (MM) has means defining a page hash table therein addressable by said second hashed virtual page number and a secondary table for addresses, wherein the central processor (CPU) is responsive to macrocode instructions for executing at least one microcode instruction, each within one timing cycle and wherein the converting means further comprises means responsive to the failure to locate the physical address in the page hash table for producing a microcode controlled look-up of the address in the secondary table, and preferably further comprising a secondary storage device, wherein the main memory (MM) includes a third table of addresses and a fourth table of addresses in the secondary storage device and wherein the converting means has means responsive to the failure to locate the address in the secondary table for producing a macrocode controlled look-up of the address in the third table of main memory (MM) and then the fourth table if not in the third table to locate address in the secondary storage device or indicating an error if not in the secondary storage device, and wherein preferably the converting means further comprises means for entering the address in all tables where the address was not located.

21. The data processor according to one of the claims 15 to 20, having central processing (CPU) means for executing sequences of macrocode instructions, the improvement wherein the central processing (CPU) means further comprises: means for defining (UCONDSEL) a predetermined set of exceptional data processor conditions (COND) and for detecting the occurrence of said conditions during the execution of sequences of macrocode instructions; means responsive (C8,D4,CSTK) to the detection of one of said conditions for retaining a selected portion of the state of the data processor at said detection to permit the data processor to be restarted to complete the pending sequence of macrocode instructions upon the removal of the detected condition; and means for initiating (C3,D2,C7) a predetermined sequence of macrocode instructions for the detected condition to remove the detected condition and restore the data processor to the pending sequence of macrocode instructions, and wherein preferably the means for initiating comprises means for manipulating (C7) the retained state of the data processor to remove the detected condition, and preferably further includes means for regenerating the nonretained portion of the state of the data processor, and wherein preferably the central processor (CPU) has means for defining (UCONDSEL) the set of conditions and for detecting their occurrence are controlled by microcode instructions, and wherein preferably the means for retaining (C8,D4,CSTK) the state of the data processor comprises means controlled by microcode instructions, and wherein preferably the means for initiating (C3,D2,C7) the predetermined sequence of macrocode instructions are controlled by microcode instructions.

22. The data processor according to one of the claims 15 to 21 having a main memory (MM), at least one peripheral device (PD) and central processor (CPU) for executing operations on data in predetermined timing cycles with the main memory (MM) and peripheral device (PD) synchronous therewith, the improvement wherein: the main memory (MM) has means for initiating a new memory access in each timing cycle to pipeline date therein and thereout; the central processor (CPU) comprises means for storing (TSKM) microcode instruction task sequences and for executing a microcode instruction in each timing cycle and means for interrupting (C5,C6,D3, D5) a task sequence with another task sequence in response to a predetermined system condition (TASK REQL) and for resuming the interrupted task sequence when the condition is removed; a multi-conductor bidirectional Lbus (LBUS) interconnecting the memory (MM), central processor (CPU) and peripheral device (PD) in parallel; a single centralized error correction circuit (ECC) shared by the main memory (MM), central processor (CPU) and peripheral device (PD), means for controlling data transfers (DATA CYCL) on the bus in synchronism with the system timing cycles to define a first timing mode for communication between the main memory (MM) and central processor (CPU) through the centralized error correction circuit (ECC) and a second timing mode for communication between the peripheral device (PD) and central processor (CPU) and thereafter the main memory (MM) through the centralized error correction circuit (ECC).

23. The data processor according to claim 22, wherein the central processor (CPU) includes means for storing (ID,DEV) data from said at least one peripheral device (PD) in main memory (MM) and removing data from main memory (MM) for said at least one peripheral device (PD) at a predetermined location hashed upon the peripheral device (PD), and wherein preferably the central processor (CPU) includes means for altering (T56,T63,T69,T70,T73,T76,T78) the state of the peripheral device (PD) from which data is received depending upon the state of the processor.

24. The data processor according to claim 22 or 23, comprising: a second bus called generic bus (GB,GB-BUSA,GB-BUSD); first interfacing (T37,T38;T67) means for converting data and control signals between the Lbus and generic bus formats to effect transmission between the Lbus (LBUS) and the generic bus (GB); second interfacing (T65,T66;T60,R44,C49) means connected to the generic bus (GB-BUSD,GB-BUSA) for converting data and control signals between the generic and selected external bus formats to permit data and control signal transmissions between the Lbus (LBUS) and peripheral devices (PD) of the selected external bus type; and wherein the first interfacing means (T37,T38) converts data and control signals independently of the external bus type selected, and wherein preferably the first interfacing means (T37,T38) includes means for converting (R39,C44;FEP) the control signals and address of an external bus peripheral device from the Lbus format to the generic bus format independently of the control signal and address format of the external bus type.

25. The data processor according to one of the claims 15 to 24, having a central processor (CPU) for executing sequences of macrocode instructions wherein given sequences of macrocode instructions produce incorrect processing results and means for compiling a symbolic processing language program into sequences of macrocode instructions, the improvement wherein the compiling means comprises means for preventing the generation of said given sequences, and preferably comprising means for dividing the main memory (MM) into predetermined regions; means for locating (HASH,MAPA,C37) data objects in said regions; means for producing a table (M1) of action codes each corresponding to one region; means for applying (C10) a generated address to the table (M1) in parallel with the operation thereon to obtain the action code (TYPE TRAP, TYPE COND) associated therewith; and means responsive (C3) to the action code for determining in parallel with the operation on the address if an action is to be taken, and wherein preferably the central processor (CPU) executs each operation in a predetermined timing cycle and wherein the action code is obtained and the response thereto is determined within the same timing cycle as that of the operation on the address, and preferably comprising means for interrupting (D2,C7) the operation of the central processor (CPU) in response to a predetermined action code and for resuming operation of the data processor in response to the completion of the action taken, and wherein preferably the central processor (CPU) has means for executing operations by at least one microcode instruction and wherein the determining (C3) means comprises means controlled by microcode instructions.

26. The data processor according to one of the claims 15 to 25, wherein the central processor (CPU) includes means for executing a sequence of macrocode and microcode instruction sequences to effect garbage collection (C10,M2) in the data processor by determining areas in memory to be garbage collected and wherein the means for producing (C10) the action code table produces one action code which initiates the garbage collection sequences, and preferably comprising means for effecting garbage collection comprising means for examining the data object at a generated address and check if it was moved to a new address, means for moving the data object to a new address in a new region if it was not moved, means for updating the data object at the generated address to indicate that it was moved, means for changing the generated address to a new address if and when the data object is moved and for effecting continuation of the operation with the data object at the generated address.

27. The data processor according to one of the claims 15 to 26, having a main memory (MM) divided into pages, the improvement comprising: storage (M9) means having at least one bit associated with each page of memory; means for locating (C47) a given address in a region of memory; and means for entering (FEP,C46,C44) a code in the at least one bit for a given page in parallel with the locating of the address indicating whether an address therein is in a selected set of regions in main memory (MM) and wherein preferably the entering (FEP,C44) means comprises means for producing (C47) a table of action codes each corresponding to one region of memory, means for applying (R41,R42) an address to the table (M9) in parallel with the locating thereof and means for determining (C47) if the address is in one of the selected set of regions in response to its associated action code, and preferably comprising means for effecting (C47,C44,FEP) garbage collecting of the set of memory regions comprising means for reviewing each page for effecting garbage collection and means for sensing the at least one bit for each memory page to enable the reviewing means to skip page when the code is not entered therein.

0113460

28. The data processor according to one of the claims 15 to 27, having a system clock, central processor (CPU), means for producing a Lbus request signal (REQUEST) to effect a transaction between at least one peripheral device (PD) and the central processor (CPU), the improvement comprising: bus control (C48,C44,R39) means for effecting all transactions on the Lbus in synchronism with the clock with a request cycle comprising one clock period wherein the central processor (CPU) means produces the request signal (REQUEST) along with address data, an active cycle comprising at least one next clock period wherein the peripheral device (PD) is accessed and a data cycle comprising the next clock period wherein data is placed on the Lbus by the peripheral device (PD), and wherein preferably the Lbus control (C48, C44,R39) means has means defining a block bus transaction mode for receiving a series of request signals from the central processor (CPU) in consecutive clock periods and for overlapping the cycles of consecutive transactions on the Lbus.

29. Data processor according to claim 28, effecting transactions in predetermined timing cycles with the memory (MM) and peripheral device (PD) synchronous with the system clock by producing a bus request signal (REQUEST), the improvement wherein: the main memory (MM) has means for initiating a new memory access in each timing cycle to pipeline data therein and thereout and comprising means for controlling data transfers on the Lbus (LBUS) in synchronism with the timing cycles for communication between the memory (MM) and central processor (CPU) including a request cycle comprising one clock period wherein the central processor (CPU) produces the request signal (REQUEST) along with address data signals, an active cycle comprising at least one next clock period wherein the peripheral device (PD) is accessed and a data cycle comprising the next clock period wherein data signals are placed on the Lbus (LBUS) by the peripheral device (PD) and a block bus transaction mode signal for receiving a series of request signals (REQUEST) from the central processor (CPU) in consecutive clock periods and for overlapping the cycles of consecutive transactions on the Lbus (LBUS) and for communication between the peripheral device (PD) and central processor (CPU) and thereafter the main memory (MM).

30. The data processor according to claim 28 or 29, comprising the Lbus (LBUS) working synchronous with the system clock having means responsive to a transaction request signal (REQUEST) from the data path (DP) unit or a front end processor (FEP) unit or the memory controler (MC) or the sequencer (SQ) for receiving address data in a request cycle comprising one system clock period; means for accessing addressed data in an active cycle comprising at least one next system clock period and for producing a wait signal (WAIT) when more than one system clock period is necessary; and means for applying data to the Lbus (LBUS) in a data cycle comprising the next system clock period and further the data path (DP) unit, the front end processor (FEP), memory controler (MC), or the sequencer (SQ) comprising means for receiving request signals in consecutive system clock periods and for overlapping the request, active and data cycles for consecutive transactions, and preferably the front end processor (FEP), the memory controler (MC), or the sequencer (SQ)comprising means for effecting data transfers on the Lbus (LBUS) in synchronism with the system timing cycles in a timing mode for communication between those and the central processor (CPU) and thereafter between those and the main memory (MM).

31. The data processor according to one of the claims 15 to 30, comprising hardware (ECC) and compiler means for failure diagnosis and elimination prior to operation on data and execution of a program by the central processor (CPU), and further comprising hardware detection C21, P1 - P10, means for double error detection and parity error detection, and software error detection (C10,M1,M2) circuitry, and hardware and software correcting means to recover automatically from named double, parity, and software errors including means calling microprogram and/or macroprogram recovery routines or tasks thereby using the information in the state registers, stack memories, map memories, buffer memories and/or historical information contained in an old program counter (OPC) memory and occasionally a spy bus (SPY BUS) via which spy requests are given by the central processor (CPU) or the front end processor (FEP) to spy the named and historical informations.

Fig.1

SPY BUS    LBUS

| SQ | DP | MC | FEP | I/O | MM | OD |

SQ: UIR, CSTK, TSKM

DP: CPU, AMEM, BMEM, TYPE TAG

MC: IFU, MAP, HASH

FEP: BUF, PAGE TAG

I/O: GB, PD, PD

FEP: GB, EB, PD

0113460

Fig.2

Fig.3

Fig.4

Fig.5

Fig.6

Fig.7

Fig.8

-9/12

C113460

Fig.9

Fig.10

Fig.11

Fig.12

EB-EXTERNAL BUS

12/12

0113460

Fig.13

Fig.14

Fig.15